(19) Europäisches Patentamt / European Patent Office / Office européen des brevets

(11) **EP 3 861 374 B1**

(12) **EUROPÄISCHE PATENTSCHRIFT**

(45) Veröffentlichungstag und Bekanntmachung des Hinweises auf die Patenterteilung:
**26.02.2025  Patentblatt 2025/09**

(21) Anmeldenummer: **19783510.1**

(22) Anmeldetag: **04.10.2019**

(51) Internationale Patentklassifikation (IPC):
**G01S 17/894** (2020.01)   **G01S 7/4863** (2020.01)
**G01S 7/4865** (2020.01)   **G01S 7/497** (2006.01)
**G01S 17/10** (2020.01)

(52) Gemeinsame Patentklassifikation (CPC):
**G01S 7/4863; G01S 7/4865; G01S 7/497;**
**G01S 17/10; G01S 17/894; H04N 25/78**

(86) Internationale Anmeldenummer:
**PCT/EP2019/076963**

(87) Internationale Veröffentlichungsnummer:
**WO 2020/070311 (09.04.2020 Gazette 2020/15)**

(54) **BILDGEBENDER SENSOR**

IMAGING SENSOR

CAPTEUR D'IMAGERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **04.10.2018  DE 102018124551**
          **12.09.2019  DE 102019124573**

(43) Veröffentlichungstag der Anmeldung:
**11.08.2021  Patentblatt 2021/32**

(73) Patentinhaber: **Iris-Gmbh Infrared & Intelligent Sensors**
**12459 Berlin (DE)**

(72) Erfinder:
• **THUN-HOHENSTEIN, Andreas**
**12555 Berlin (DE)**
• **LEDER, Harald**
**12249 Berlin (DE)**
• **WAGNER, Wilfried Lothar**
**12683 Berlin (DE)**

(74) Vertreter: **Eisenführ Speiser**
**Patentanwälte Rechtsanwälte PartGmbB**
**Stralauer Platz 34**
**10243 Berlin (DE)**

(56) Entgegenhaltungen:
EP-A1- 3 182 162     WO-A1-2017/050633
WO-A1-2018/172767     US-A1- 2017 257 617

# EP 3 861 374 B1

**Beschreibung**

**Zusammenfassung**

Bildgebende 3D-time-of-flight Sensoren (TOF Sensoren) sind im besonderen Maße geeignet für die Detektion von Objekten und Personen im dreidimensionalen Raum. Diese Fähigkeit resultiert aus dem Grundprinzip. In jedem Bildpunkt des Sensors wird der Abstand zu den im Erfassungsbereich des Sensors befindlichen Objekten anhand der Laufzeit (auch als Flugzeit oder time of flight (tof) bezeichnet) von Lichtimpulsen bestimmt. Der Sensor liefert daher ein Sensorausgangssignal, das einen Datensatz widerspiegelt, in dem zu jedem Bildpunkt (auch als Pixel bezeichnet) des Sensors ein Abstandwert enthalten ist, der dem Abstand zwischen dem jeweiligen Bildpunkt und dem auf diesen Bildpunkt abgebildeten Objektoberflächenabschnitt entspricht. Der Sensor liefert somit ein dreidimensionales Bild, welches sich mit entsprechenden Verarbeitungsalgorithmen analysieren lässt. Beispielsweise ist es bekannt, dass das Sensorausgangsignal dahingehend analysiert wird, ob sich Objekte innerhalb eines vorgegebenen Raumsektors befinden. In bestimmten Anwendungen kann mit Hilfe eines oder mehrerer bildgebender 3D-time-of-flight Sensoren detektiert werden, ob sich ein Mensch und ein Maschinenteil z.B. im Aktionsbereich der Maschine gefährlich nahekommen

In bestimmten Anwendungsfällen insbesondere in der Interaktion von Mensch und Maschine, Maschine und Maschine oder Maschine und Raum ist es erforderlich, dass die Detektion besonders zuverlässig, das heißt sicher (safe) ausgeführt wird.

Der Grad der Sicherheit wird in verschiedenen Normen in Sicherheits-Integritäts-Niveaus (SIL - safety integrity level) eingestuft:

| Automobile (ISO 26262) | QM | ASIL-A | ASIL-B/C | ASIL-D | - |
|---|---|---|---|---|---|
| Allgemein (IEC-61508) | - | SIL-1 | SIL-2 | SIL-3 | SIL-4 |
| Luftfahrt (DO-1781254) | DAL-E | DAL-D | DAL-C | DAL-B | DAL-A |
| Eisenbahn (CENELEC 50126/128/129) | - | SIL-1 | SIL-2 | SIL-3 | SIL-4 |

**Stand der Technik**

Bekannt sind 3D-TOF-Sensoren, die mindestens einen optischen Sender zum Aussenden elektromagnetischer Strahlung vorzugsweise (aber nicht ausschließlich) im nahen Infrarotbereich und einen Bildaufnehmer ausweisen, der aus einer Anordnung von Strahlungsempfängern aufgebaut ist. Die einzelnen Strahlungsempfänger entsprechen jeweils einem Pixel (Bildpunkt) des Bildaufnehmers und damit des 3D-TOF-Sensors.

In US 2017/257617 A1, WO 2017/050633 A1, EP 3 182 162 A1 und WO 2018/172767 A1 sind verschiedene Time-of-Flight Sensoren beschrieben.

Typischerweise sind die Strahlungsempfänger in zwei Gruppen (Strahlungsempfänger A, Strahlungsempfänger B) eingeteilt und als Matrix angeordnet.

Jeder Strahlungsempfänger besitzt ein fotoempfindliches Element (z.B. eine Fotodiode oder ein Fotogate) und mindestens eine Speicherkapazität.

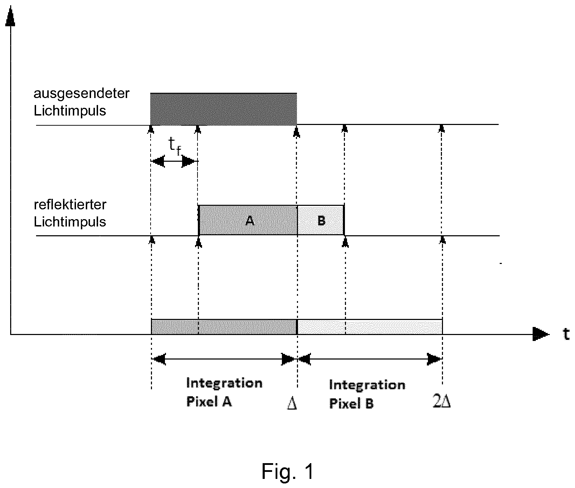

Eine typische Funktionsweise eines TOF-Sensors ist wie folgt:
Zu einem Zeitpunkt t0 wird der Sender aktiviert, der für einen kurzen Zeitraum ti (z.B. 30ns) einen Lichtimpuls mit einer ti entsprechenden Lichtimpulsdauer aussendet. Gleichzeitig wird der Strahlungsempfänger A für ebenfalls einen kurzen Aktivierungszeitraum tA (z.B. ebenfalls 30ns) aktiviert. Der Lichtimpuls wird an einem Objekt reflektiert und vom Strahlungsempfänger A um die Flugzeit tof versetzt registriert. Während des Aktivierungszeitraums tA bewirkt die Energie des reflektierten Lichtimpulses das Freisetzen von Ladungen - nämlich von Fotoelektronen - in dem fotoempfindlichen Element. Die aus der Registrierung des Lichtimpulses resultierende Ladungsmenge (entsprechend der Anzahl freigesetzter Fotoelektronen) werden auf der Speicherkapazität (A1) abgelegt. Der Empfänger A kann nur jenen Teil des reflektierten Lichtimpulses aufnehmen, der der Zeitdifferenz tA-tof entspricht, da der reflektierte Lichtimpuls um die Flugzeit tof gegenüber dem Beginn des Aktivierungszeitraums verzögert auf das fotoempfindliche Element trifft, so dass sich der Aktivierungszeitraum und die Pulsdauer des reflektierten Lichtimpulses nur teilweise für eine Überlappungsdauer zeitlich überlappen. Die Überlappungsdauer ist umgekehrt proportional zu der Lauf- oder Flugzeit des Lichtimpulses (siehe Figur 1). Auch die Anzahl freigesetzter Fotoelektronen ist dementsprechend wenigstens annähernd umgekehrt proportional zu der Lauf- oder Flugzeit des Lichtimpulses.

Mit einer Zeitverzögerung $\Delta = t0+tA$ (im Beispiel wieder 30ns) - also direkt im Anschluss an das Ende des ersten Aktivierungszeitraums tA - wird der Strahlungsempfänger B aktiviert. Der Strahlungsempfänger B ist für einen zweiten Aktivierungszeitraum tB aktiv (im Beispiel ebenfalls 30ns). Der Empfänger registriert ebenfalls nur einen Teil des reflektierten Lichtimpulses, welcher der Zeitdifferenz $\Delta= tof+ti-tA$ (wenn ti=tA ist dies tof) entspricht, und somit proportional zu dieser Zeitdifferenz (der Lauf- oder Flugzeit des Lichtimpulses) ist. Die entsprechende Ladungsmenge wird auf der Speicherkapazität B1 abgelegt.

Da die reflektierten Signale in Abhängigkeit vom Reflexionsgrad des reflektierenden Objekts und der Entfernung sehr schwach seien können, ist es notwendig einen Verstärkungsmechanismus vorzusehen. Dieser wird dadurch erreicht, dass die oben beschriebene Messung vielfach wiederholt wird und die jeweils registrierte Ladungsmenge auf der Speicherkapazität akkumuliert wird, bis eine ausreichende Signalhöhe erreicht wird.

Man kann dann die Entfernung wie folgt berechnen:

$$E1 = P(R) * kref * (T - tof)$$

$$E2 = P(R) * kref * (tof+T - T) = P(R) * kref * tof$$

mit:

E1; E2 - Energien je Abtastung für Empfänger A bzw. B

T = tA = tB = ti - max. Flugzeit =30ns für einen max. Abstand von 4,5m (Eindeutigkeitsbereich)

kref - Reflexionskoeffizient des Targets,

tof - Flugzeit des Impulses,

P(R) - reflektierte Impulsleistung bei kref = 1,

Die Ladungsmengen sind den jeweiligen Energiewerten je Abtastvorgang proportional.

Vereinfacht könnte man für 200 Akkumulationen schreiben:

mit

$$A = \sum_{n=1}^{200} pE_1$$

$$B = \sum_{n=1}^{200} pE_2$$

A; B - in der Speicherkapazität A bzw. B akkumulierte Ladungsmengen,

p - ist der Proportionalitätsfaktor, dessen konkrete Eigenschaften für diese Betrachtungen nicht relevant sind.

Durch Normierung (Division durch die Summe der in den beiden Kapazitäten akkumulierten Ladungsmengen) können vom Reflektionsgrad unabhängige, normierte Ladungsmengen Q1 und Q2 gebildet werden.

$$Q1 = A / (A + B)$$

(durch Quotientenbildung Eliminierung der Abhängigkeit vom Reflexionsgrad)

$$Q2 = B / (A + B)$$

können aus der normierten Ladungsmenge für jede Kapazität je ein Wert für die Flugzeit gebildet werden:

$$tof1 = (1 - Q1){\cdot}T$$

$$tof2 = Q2{\cdot}T$$

Im fehlerfreien Idealfall sind die beiden so ermittelten Flugzeiten tof1 und tof2 gleich: tof 1 = tof 2. Eventuelle Messfehler können durch Mittelwertbildung vermindert werden:

$$tof = \tfrac{1}{2}\,(tof1 + tof2)\,(\text{Mittelwert})$$

Die gemessene Entfernung zwischen Sensor und reflektierendem Objekt ergibt sich zu:

$$S = \tfrac{1}{2}\,(c * tof)$$

c- Lichtgeschwindigkeit

Eine erweitere Variante des beschriebenen Aufbaus besteht darin, dass jeder Empfänger über zwei Speicherkapazitäten (Empfänger A über Aa und Ab; Empfänger B über Ba und Bb) verfügt. Aus dieser Eigenschaft ergeben sich erweiterte Funktionsmöglichkeiten.

**Erste Möglichkeit:**

Die Empfänger A und B werden identisch betrieben. Die Speicherkapazitäten Aa und Ab werden versetzt geschaltet - Ab übernimmt die Funktion von B (wie oben beschrieben).

Anstelle von zwei Fotoempfängern wird nur ein Fotoempfänger mit je zwei Speicherkapazitäten

$$Aa = \sum_{n=1}^{200} pE_1$$

$$Ab = \sum_{n=1}^{200} pE_2$$

verwendet. Der Vorteil einer solchen Anordnung kann bei geeigneter Konstruktion in einer höheren Dichte der Empfänger (bessere Auflösung) liegen.

**Zweite Möglichkeit:**

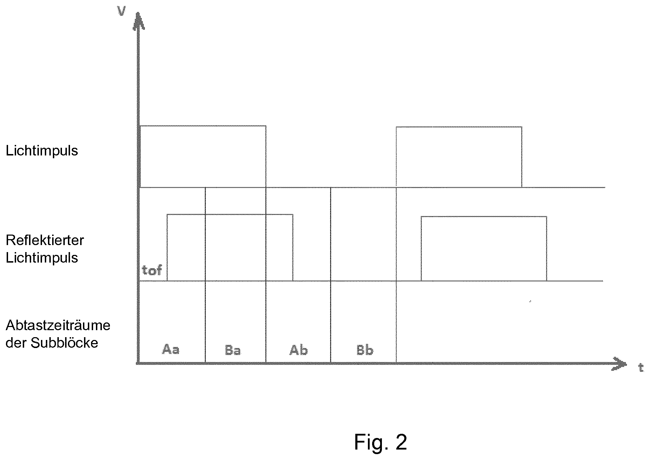

Man setzt die zusätzlichen Speicherkapazitäten für eine 4-Phasenabtastung des Signals ein. Während in Figur 1. eine Signalabtastung mit zwei Integrationszeiträumen beschrieben ist (2-Phasen) kann nun das Signal vierfach abgetastet werden, dabei werden die Abtastpunkte jeweils um ¼ der Periode des Signals versetzt, siehe Figur 2. Für die Ausführungsvariante können auch periodische Pulsfolgen mit einer Periodendauer T als ausgesendetes Signal verwendet werden.

Über die durch die Flugzeit tof bedingte Phasenverschiebung φ des reflektierten Signals kann aus den in den Kapazitäten akkumulierten Ladungsmengen Aa, Ab, Ba und Bb wie folgt berechnet werden.

$$\varphi = \tan^{-1}\frac{Aa - Ab}{Ba - Bb}$$

Strenggenommen gilt die Berechnung des Phasenwinkels nur für sinusförmige Signale.

Anschließend kann aus der Phasenverschiebung φ die Entfernung S zwischen Sensor und reflektierendem Objekt berechnet werden:

$$S = \frac{\varphi * T}{2\,\pi}$$

T - ist in diesem Fall die Periode des periodischen Signals.

Die für die zweite Möglichkeit dargestellten Beziehungen gelten auch dann, wenn als periodisches Signal eine sinusförmige Form gewählt wird.

Welche Methode zweckmäßig ist hängt weitestgehend von der konkreten Anwendung und der Systemauslegung des TOF-Sensors ab.

Während man die unter Figur 1 beschriebene Methode in der Regel mit sehr leistungsstarken Impulsen bei einem sehr kleinen Tastverhältnis verwendet (z.B. >25W Pulsleistung; 1:1000) werden die in Figur 2 abgebildeten Pulsfolgen oder mit einem Tastverhältnis von 1:1 bei Leistungen von 1W bis 4W Pulsleistung angewendet. Ähnlich verhält es sich mit der Wahl der Peakleistung für die sinusförmige Modulation der Lichtquelle. Eine Limitierung der verwendeten Leistungen ist durch die Einhaltung der Augensicherheit zu beachten.

**Verwendung von Active Pixel Sensoren (APS)**

Es ist bekannt für jeden Bildpunkt einen Active Pixel Sensor (APS) vorzusehen. Ein Active Pixel Sensor weist typischerweise eine Photodiode und mehrere (Feldeffekt-) Transistoren auf. Auf die Photodiode fallendes Licht setzt in der Sperrschicht der Photodiode Ladungen frei, so dass dir (Sperr-) Spannung über der Diode infolge auftreffender Photonen abnimmt. Ein Active Pixel Sensor wird wie folgt betrieben: Zu Beginn des Aktivierungszeitraums wird die Spannung über der Photodiode mittels des Rücksetz-Transistors auf einen definierten Anfangswert gesetzt. Während des Aktivierungszeitraums wird die Sperrschichtkapazität der Photodiode durch den vom auftreffenden, reflektierten Lichtimpuls bewirkten Photostrom entladen. Die Spannung über der Photodiode sinkt dabei proportional zur Intensität des reflektierten Lichtimpulses und zur Dauer desjenigen Anteils des Lichtimpulses, der in den Aktivierungszeitraum des Active Pixel Sensors fällt. Am Ende des Aktivierungszeitraums wird der Spannungswert der über die Photodiode abfallenden Spannung ausgelesen und einer analogen Nachverarbeitung oder sofort einem Analog-Digital-Wandler (ADU) zugeführt. Dafür besitzt jedes Bildelement einen Verstärker-Transistor, der mittels des Auswahl-Transistors zumeist spaltenweise auf eine für alle Bildelemente einer Zeile gemeinsame Ausleseleitung geschaltet wird. Active Pixel Sensoren können in CMOS (Complementary Metal-Oxide-Semiconductor) Technik implementiert werden. Da Ladungen in der Sperrschicht der Photodiode auch z.B. durch thermische Prozesse freigesetzt werden können, kommt es typischerweise zu einem Signalrauschen, welches das eigentliche Photosignal überlagert.

**Correlated Dual Sampling (CDS)**

Um das angesprochene Signalrauschen zu vermindern, ist es bekannt, die Spannung über der Photodiode nicht nur einmal zum Ende des Aktivierungszeitraums zu messen, sondern anschließend nach dem Zurücksetzen der Photodiode zum Wiederherstellen der vollen Sperrspannung (Dunkelspannung) noch einmal, um so ein Referenzsignal zu erhalten, mit dem Rauschsignalanteile zumindest teilweise kompensiert werden können.

Sensoren, die ein derartiges Correlated Dual Sampling verwirklichen, weisen für jeden Pixel eine entsprechende Schaltung auf, die hier als CDS-Stufe bezeichnet wird. Die CDS-Stufe kann beispielsweise mit Hilfe von Operationsverstärkern realisiert werden.

**Aufbau eines Pixels**

Ein Pixel eines Bildsensors kann folgende Bestandteile aufweisen.

- einen Active Pixel Sensor (hier auch als APS-Zelle bezeichnet)

- eine CDS-Stufe, die der APS-Zelle zugeordnet ist und

- eine Sample-und-Hold-Stufe (S&H) zum Auslesen des Pixels.

**Erfindung**

Ziel der vorliegenden Erfindung ist es den Aufbau eines oben beschriebenen TOF-Sensors so auszulegen, dass ein gefährlicher Ausfall sehr unwahrscheinlich ist und vorzugsweise nur mit einer Wahrscheinlichkeit von kleiner als 1 in 1100 Jahren auftreten kann (SIL3, bzw. Kat 4, PL e laut ISO 13849-1).

Erfindungsgemäß wird zum Erreichen dieses Ziels ein 3D-TOF mit mindestens einer Pixelmatrix vorgeschlagen, die eine in mindestens zwei Signalpfade (Kanäle A und B) geteilte Pixelstruktur aufweist, wobei die Signalpfade so geführt sind, dass die Signallaufzeiten entsprechend Pixellokalisierung für beide Kanäle identisch sind (H-Baum) und wobei jeder Signalpfad über einen eigenen unabhängigen analogen Signalausgang verfügt (Signal A und Signal B), und wobei der 3D-TOF-Sensor außerdem mindestens zwei optische Sendergruppen aufweist, von denen jede Sendergruppe mindestens einen Sender enthält.

Vorzugsweise sind die Sender ausgebildet, Infrarotlicht abzugeben, so dass sie im Infrarotspektralbereich des Lichts arbeiten.

Vorzugsweise ist für jeden Signalpfad der Pixelmatrix eine eigene Logik (Logik des Signalpfads A und des Signalpfads B) zum Steuern vorgesehen. Hierbei ist die Logik jedes Signalpfades vorzugsweise ausgebildet, Amplituden und Abstandswerte durch Verarbeitung der Signalwerte beider Kanäle zu bestimmen, indem die Kanaldaten kreuzweise ausgetauscht werden. Gemäß einer ersten Erfindungsvariante sind die optisch empfindlichen Flächen der Pixel des ersten Kanals (Pixel A) und der Pixel des zweiten Kanals (Pixel B) optisch so verbunden, dass beide Pixel immer die gleiche Lichtmenge aufnehmen.

Die optisch empfindlichen Flächen der Pixel des ersten Kanals (Pixel A) und der Pixel des zweiten Kanals (Pixel B) sind erfindungsgemäß paarweise optisch so verbunden, dass beide Pixel die gleiche Lichtmenge aufnehmen, beispielsweise mittels eines Diffusors, der die Lichtmenge gleichmäßig über die optischen Flächen jeweils eines Pixels aus dem Kanal A (Pixel A) und eines Pixels aus dem Kanal B (Pixel B) verteilt. Dieses Verfahren wird hier als optisches Binning bezeichnet. Hierbei sind die Signalpfade der jeweils ein Pixel A und ein Pixel B umfassenden Pixelgruppen nicht elektrisch miteinander verbunden. Im Anwendungsfall kann die Pixelmatrix durch parallele Adressierung der Pixel im Kanal A und Kanal B ausgelesen werden. Am Ausgang der Pixelmatrix liegen folglich immer gleichzeitig die Signalwerte von Signal A1 und Signal B1; von Signal A2 und Signal B2; ... ; von Signal An und Signal Bn an.

Vorzugsweise ist eine Komparatorstufe vorgesehen, die ausgebildet ist die Signalwerte, die parallel an den Ausgängen der Pixelmatrix anliegen, miteinander zu vergleichen. Hierbei wird der digitalisierte Ausgabewert des Komparators vorzugsweise in mindestens einer der Logiken A oder B mit einem Vorgabewert verglichen. Wenn dann beide Signalwerte eine hohe Differenz aufweisen und somit beispielsweise der Komparatorvergleichswert für die Differenz überschritten wird, bildet die Logik vorzugsweise ein Fail-Signal und der Auslesevorgang der Pixel des 3D-TOF Sensors wird abgebrochen.

Vorzugsweise ist ein Analog-Digital-Wandler (ADU) vorgesehen, der dem Kanal A bzw. dem Kanal B zugeordnet und ausgebildet ist, die analogen Signalwerte A und B in dem jeweiligen Kanal zu digitalisieren und jeweils der Logik des Kanals A bzw. der Logik des Kanals B zuzuführen. Anschließend können die digitalisierten Kanalwerte verglichen werden. Die Kanaldaten werden dafür vorzugsweise kreuzweise ausgetauscht. Überschreitet der berechnete Differenzwert den Vergleichswert bildet die Logik vorzugsweise ein Fail-Signal und der Auslesevorgang wird abgebrochen.

Vorzugsweise ist der 3D-TOF Sensor ausgebildet, einen zusätzlichen speziellen Signalverarbeitungsschritt durchzuführen, und zwar derart, dass die Prüfung der Funktionsfähigkeit der Fotoempfänger durch einen Vergleich der Signalwerte A und der Signalwerte B in dem zusätzlichen speziellen Signalverarbeitungsschritt erfolgt. Mit dem Start der Sender (mindestens einer Sendergruppe), erfolgt die zeitgleiche Aktivierung der Pixel A und der Pixel B, genauer gesagt erfolgt die Aktivierung der Speicherkapazitäten der jeweiligen Pixel. Für den Zweiphasenmodus entspricht der Aktivierungszeitraum der doppelten Länge der Lichtimpulsdauer und im Vierphasenmodus genau der Länge der Lichtimpulsdauer. Durch diesen Signalschritt werden am Ausgang der Pixelmatrix mit optisch gebinnten Pixeln jeweils gleiche Signalwerte am Ausgang der beiden Kanäle A und B erwartet. Gleiche Signalwerte (der Komparatorschwellwert wird unterschritten) sind ein Hinweis auf die Funktionsfähigkeit der Pixel.

Vorzugsweise ist der 3D-TOF Sensor ausgebildet, einen weiteren zusätzlichen Signalverarbeitungsschritt durchzuführen, in dem die Funktionsfähigkeit der Sendergruppen geprüft wird. Mit dem Start der Sender (nur eine Sendergruppe) erfolgt die Aktivierung entweder der Pixel A oder der Pixel B, genauer gesagt erfolgt die Aktivierung der entsprechenden Speicherkapazitäten der jeweiligen Pixel. Der Aktivierungszeitraum wird gegenüber dem Bildzyklus mit jeweils doppelter Aktivierungszeitdauer ausgeführt. Für den Zweiphasenmodus entspricht die Dauer des Aktivierungszeitraums der doppelten Lichtimpulsdauer und im Vierphasenmodus genau der Lichtimpulsdauer. Als Ergebnis dieses weiteren zusätzlichen Signalschritts werden am Ausgang der Pixelmatrix mit optisch gebinnten Pixeln jeweils verschiedene Signalwerte am Ausgang der beiden Kanäle A und B erwartet.

Die Differenz der Signalwerte am Ausgang der analogen Pixelmatrix ist ein Hinweis, dass die jeweilige Sendergruppe einen Lichtimpuls gesendet hat und funktionsfähig ist.

Ist der Nachweis für eine Sendergruppe erbracht, so kann das gleiche Verfahren für die andere Sendergruppe erfolgen. Ein bevorzugtes Verfahren ist der jeweilige Wechsel der Sendergruppen zwischen zwei Bildzyklen.

Vorzugsweise ist der 3D-TOF Sensor so ausgebildet, dass der Start eines Bildzyklus mit der Prüfung der ersten Sendergruppe (Anspruch 9) erfolgt, und dass dann die Prüfung der Fotoempfänger (Anspruch 8) erfolgt und dann der eigentliche Bildprozess folgt. Ist der Bildzyklus abgeschlossen so startet der nächste Bildzyklus mit der nächsten (also mindestens der zweiten) Sendergruppe. Dieser Wechsel der Sendergruppen wird je nach Anforderung beliebig fortgesetzt.

Gemäß einer Ausführungsvariante kann der 3D-TOF Sensor ausgebildet sein, den Signalschritt des Prüfens der ersten Sendergruppe (Anspruch 9) dadurch einzusparen, dass die Sendergruppen in wenigstens zwei verschiedenen Wellenlängenbereichen (die sich ggf. überlappen können) arbeiten und die Pixelmatrix so aufgebaut ist, dass Pixel A und Pixel B durch ein entsprechendes optisches Filter auf eine der beiden verschiedenen Wellenlängenbereiche festgelegt sind, indem das jeweilige optische Filter nur einen der beiden Wellenlängenbereiche passieren lässt. Eine besonders bevorzugte Lösung ist die Verwendung der Wellenlänge 850nm für die erste Sendergruppe und die Pixel des Kanal A und 940nm für die zweite Sendergruppe und die Pixel des Kanals B. Wird nun der Signalschritt nach Anspruch 6 ausgeführt, so werden in diesem Fall die erste und die zweite Sendergruppe gleichzeitig aktiviert. Die Pixel des Kanals A empfangen den reflektieren Lichtimpuls im ersten Wellenlängenbereich (850nm) und die Pixel des Kanals B empfangen den reflektierten Lichtimpuls im zweiten Wellenlängenbereich (940nm). Liegen dann am Ausgang der Kanäle A und B gleichgroße oder Signalwerte in einem vorgegebenen Verhältnis für die jeweils nachbarschaftlich adressierten Pixel an, so ist das ein Nachweis, dass sowohl die adressierten Fotoempfänger der beiden Kanäle als auch die beiden Sendergruppen

EP 3 861 374 B1

funktionsfähig sind.

Vorzugsweise kann auch hierbei zur Verbesserung der Übereinstimmung der Signalwerte der vorstehend dargelegten optischen Filterung nach den beiden Wellenlängen ergänzend ebenfalls ein optisches Binning vorgesehen sein.

Vorzugsweise kann der 3D-TOF-Sensor dadurch verbessert sein, dass die Fläche der Fotoempfänger des Kanals A und des Kanals B entsprechend der gewählten Wellenlänge so angepasst sind, dass die für verschiedenen Wellenlängen unterschiedliche Quanteneffizienz ausgeglichen wird, also bei intaktem 3D-TOF-Sensor am Ausgang der Kanäle A und B gleichgroße Signalwerte anliegen.

Vorzugsweise verfügt jeder Kanal über einen eigenen Prozessor, der an den Signalpfad der Logik des Kanals angeschlossen ist. Weiterhin sind die Prozessoren vorzugsweise mit dem Eingang des jeweils anderen Kanals verbunden. Jedem Prozessor werden daher die berechneten Amplituden und die Abstandswerte übermittelt, die die jeweilige Logik ermittelt hat.

Die logischen Operationen jeder Kanallogik werden vorzugsweise dadurch geprüft, dass jeder Prozessor vollständig unabhängig von dem anderen Prozessor mindestens einen Prüfwert (Zufallszahl) berechnet. Typischerweise wird ein Prüfwert für den Zweiphasenmodus und zwei Prüfwerte für den Vierphasenmodus berechnet. Jeder Prüfwert wird durch den Prozessor an die Logik des gleichen Kanals übergeben. Die Logik berechnet mit den übergebenen Prüfwerten und den Prüfwerten des anderen Kanals mindestens einen Ausgabewert, vorteilhafterweise zwei. Für die Berechnung des Ausgabe-wertes werden die gleichen Operationen verwendet, wie für die Berechnung der Amplituden und Abstandwerte. Die Ausgabewerte werden an den Prozessor des jeweiligen Kanals übergeben. Der Prozessor berechnet seinerseits die zu erwartenden Ausgabewerte und prüft die erhaltenen Ausgabewerte der Logik seines Kanals gegen die selbst berechneten Ausgabewerte und gibt bei einer Abweichung ein Fail-Signal aus.

In einer besonders bevorzugten Ausführung ist vorzugsweise einer der beiden Prozessoren ein sicherheitsgerichteter Prozessor. Ein sicherheitsgerichteter Prozessor verfügt mindestens über zwei unabhängige rückwirkungsfreie Rechenkerne und verarbeitet zwei Eingänge auf einen Ausgang (1oo2 - one out of two). Vorzugsweise wir diese Architektur für die Aufteilung der Bildoperationen auf einen safe- und einen non-safe-Bildverarbeitungsprozess verwendet. Der safe-Prozess untersucht ausschließlich, ob in dem definierten Gesichtsfeld des 3D-TOF-Sensors Abweichungen einzelner Bildpunkte von der erwarteten Normlage auftreten (Deformierung der 3D-Punktwolke). Trifft eine solche Abweichung zu, wird ein Alarm-Signal ausgegeben.

Auf dem non-safe-Prozessor erfolgt eine komplexe Bildverarbeitung mit dem Ziel die eigentliche Ursache für die Deformation der Punktwolke zu identifizieren (z. B. Erkennen der Bewegung eines Menschen, einer Hand eines Kopfes usw.).

Gemäß einer zweiten Erfindungsvariante wird ein 3D-TOF-Sensor vorgeschlagen, der sich vorzugsweise durch die folgenden Merkmale auszeichnet:

Der 3D-TOF-Sensor besitzt einen Bildaufnehmer mit einer Pixelmatrix, wobei,

> die Pixelmatrix mindestens zwei separate unabhängige Blöcke aufweist und die Daten in mindestens zwei separate Signalpfade übergibt; und/oder

> die Pixel der Pixelmatrix des Bildaufnehmers mindestens über einen photoempfindlichen Empfänger und eine Speicherzelle zum Speichern von Ladungsträgern verfügen und/oder

> die Signalpfade mindestens aufgebaut sind aus einem Analog-Digital-Wandler (ADU), einer programmierbaren Logik, Speicherzellen sowie einem daran angeschlossenen Prozessor und/oder

> der Bildaufnehmer mindestens über einen für alle Blöcke globalen Shutter (Globalshutter) verfügt, der über ein Steuersignal der programmierbaren Logik ausgelöst werden kann und eine minimale Shutterzeit von kleiner 100ns einstellen kann, und/oder

> die Signalpfade unabhängig und rückwirkungsfrei voneinander beschaltet sind, und/oder

> die Signalpfade so beschaltet sind, dass die Daten der Logiken oder der Prozessoren kreuzweise ausgetauscht werden können, und/oder

> jedem Block des Bildaufnehmers eine eigene abbildende Optik so zugeordnet ist, dass auf den Blöcken das gleiche Bild der Objektseite abgebildet wird. Der Abstand der Optiken wird so klein gewählt, dass der Parallaxenfehler nicht aufgelöst werden kann, und/oder

> jedem Block mindestens eine Beleuchtungsquelle zugeordnet ist, die mit dem Globalshutter über die Logik

7

synchronisiert wird.

Der Bildaufnehmer zeichnet sich vorzugsweise dadurch aus, dass jeder Block über einen separaten Globalshutter verfügt, der von der Logik der zugeordneten Signalpfade gesteuert werden kann.

Der Bildaufnehmer zeichnet sich vorzugsweise dadurch aus, dass die Globalshutter der Blöcke nur von einem einzigen Logiksignal eines einzigen Signalpfades abhängen und ihre Abhängigkeit durch einstellbare Verzögerungszeiten (Registerwerte) eingestellt sind.

Alternativ oder zusätzlich zeichnet sich der Bildaufnehmer weiterhin vorzugsweise dadurch aus, dass jedem Block ein

schmaler optischer Spektralbereich zugeordnet wird, durch einen optischen Filter oder ein System von optischen Filtern, und/oder

dass das System von optischen Filtern gebildet wird durch Filter direkt auf dem Bildaufnehmer sowie mindestens einem weiteren Filter im Abbildungssystem der Optik, und/oder

dass die optischen Filter auf den Blöcken des Bildaufnehmers als Kantenfilter eine scharfe spektrale Trennung der Blöcke sicherstellen, während der Filter im optischen Abbildungssystem als Bandfilter ausgelegt ist und die Spektralbereiche der Blöcke umfasst, und/oder

dass jedem Spektralbereich der Blöcke jeweils eine Beleuchtungsquelle zugeordnet ist, die genau in der Wellenlänge Licht emittiert, die dem Durchlassbereich der optischen Filter des entsprechenden Blocks entspricht.

Dem entspricht ein Verfahren zur zuverlässigen Aufnahme von 2D-Bilddaten mit einem Bildaufnehmer der vorgenannten Art, mit folgenden Verfahrensschritten:

In einem ersten Verarbeitungsschritt erfolgt ein Auslösen des Globalshutter mit einer vorher bestimmten Belichtungszeit. In Folge dessen liegt auf beiden Blöcken jeweils ein Ladungsbild in den Speichern der Pixel, dass der Objektabbildung entspricht.

In einem zweiten Verarbeitungsschritt werden die Bilddaten des ersten Blocks an die Verarbeitungslinie des ersten Blocks übergeben (Readout Block 1) und die Bilddaten an die Verarbeitungslinie des zweiten Blocks übergeben (Readout Block 2) usw. In Folge dieses Schrittes liegen in den Blöcken nun die Bilddaten in digitaler Form vor.

Die Erfindung soll nun anhand von Ausführungsbeispielen mit Bezug auf die Figuren näher erläutert werden. In den Figuren zeigt

Figur 1: illustriert die Entfernungsmessung nach dem TOF-Prinzip, welches auf einer Laufzeitmessung für einen ausgesendeten Lichtimpuls (emitted pulse) beruht;

Figur 2: illustriert eine Laufzeitmessung ähnlich wie in Figur 1 mit einer Vier-Phasen-Abtastung des reflektierten Lichtimpulses;

Figur 3: illustriert den grundsätzlichen Aufbau eines erfindungsgemäßen TOF-Sensors mit zwei parallelen Pfaden und einem Kreuzvergleich zwischen diesen;

Figur 4: illustriert, wie der in Figur 3 dargestellte, grundsätzliche Aufbau auf Pixelebene eines 3D-TOF-Sensors umgesetzt werden kann;

Figuren 5a - 5c: illustrieren verschiedene Varianten wie die Pixel einer Pixelmatrix in zwei Kanäle (Kanal A und Kanal B) aufgeteilt sein können;

Figuren 6a, 6b: illustrieren in einer Schnittdarstellung, wie ein optisches Binning realisiert sein kann;

Figur 7: illustriert am Beispiel der Pixelmatrix aus Figur 5a, wie die paarweise auszuwertenden Pixel der Kanäle A und B durch optisches Binning optisch parallel geschaltet sein können;

Figur 8: illustriert das zeitgleiche Abtasten des reflektierten Lichtimpulses;

Figur 9:      zeigt ein Schaltungsschema für das Abtasten eine Pixelmatrix gemäß der Figuren 6 und 7 nach dem in Figur 8 dargestellten Prinzip;

Figur 10:      zeigt, dass auch die Beleuchtung zum Ausgeben der Lichtimpulse doppelt ausgelegt ist und zwei Sendergruppen mit je zwei Sendern aufweisen kann, die abwechselnd zum Einsatz kommen;

Figur 11:      illustriert das an Stelle in Figur 8 dargestellten gleichzeitigen Abtastens der Pixel A und B nur eines der Pixel, also Pixel A oder Pixel B ausgetastet wird, um auf diese Weise ein Maß für die Lichtmenge der aktivierten Sendergruppe zu erhalten;

Figuren 12a, 12b:      illustrieren, dass die jeweiligen Pixel A und Pixel B der Pixelmatrix für unterschiedliche Wellenlängen bzw. unterschiedliche Wellenlängenbereiche empfindlich sein können;

Figur 13:      zeigt, dass die Pixel bei einer Pixelmatrix gemäß Figur 12a oder 12b eine unterschiedlich große Fläche haben können, falls die Quanteneffizienz der Pixel für die jeweilige Wellenlänge unterschiedlich sein sollte, um Ergebnis die dargestellten Ausgangssignale mit vergleichbaren Pegeln zu erhalten, indem eine niedrigere Quanteneffizienz durch eine größere Pixelfläche ausgeglichen wird;

Figur 14:      zeigt eine Logikschaltung mit einem weiteren Komparator um Kanäle A und B zu prüfen, die jeweils in zwei Wellenlängenbereichen arbeiten;

Figur 15:      zeigt, dass statt zweier identischer Prozessoren A und B zum Auswerten der Signale des Kanals A und B zwei verschiedene Prozessoren eingesetzt werden können, von den denen einer ein sicherheitsgerichteter Prozessor ist;

Figur 16:      zeigt den Prinzipaufbau eines Bildsensors, bei der der Operationsverstärker der CDS-Stufe durch eine Erweiterung der Schaltung auch Komparator für den Vergleich der Signalwerte der Pixel A und B auf der analogen Pixelebene wirkt;

Figur 17:      illustriert den Zyklus des Auslesens;

Figur 18:      zeigt die CDS-Stufe des Bildsensors aus Figur 16 in einem ersten Schaltzustand;

Figur 19:      zeigt die CDS-Stufe des Bildsensors auf Figur 16 in einem zweiten Schaltzustand;

Figur 20:      zeigt die CDS-Stufe des Bildsensors aus Figur 16 in einem dritten Schaltzustand;

Figur 21:      zeigt einen Bildaufnehmer mit hoher Auflösung, der mehrere parallele Auslesekanäle aufweist, die zum blockweisen Auslesen der Pixel dienen;

Figur 22:      zeigt einen Bildaufnehmer mit zwei Pixelblöcken A und B, die jeweils für unterschiedliche Wellenlängenbereiche empfindlich sind;

Figur 23:      illustriert, dass die Prüfung der Funktion der Pixelmatrix auf Blockebene genauso durchgeführt werden kann, wie auf Pixelebene (vergleiche mit Figur 8);

Figur 24:      zeigt eine Bildverarbeitungsschaltung zum Auslesen einer Pixelmatrix, die in zwei Blöcke A und B aufgeteilt ist;

Figur 25:      zeigt einen Bildaufnehmer ähnlich dem aus Figur 22, bei dem ein zusätzlicher optischer Kanal vorgesehen ist; und

Figur 26:      illustriert das serielle Abtasten des reflektierten Lichtimpulses mittels eines Bildaufnehmers, der nur einen einzigen Globalshutter aufweist.

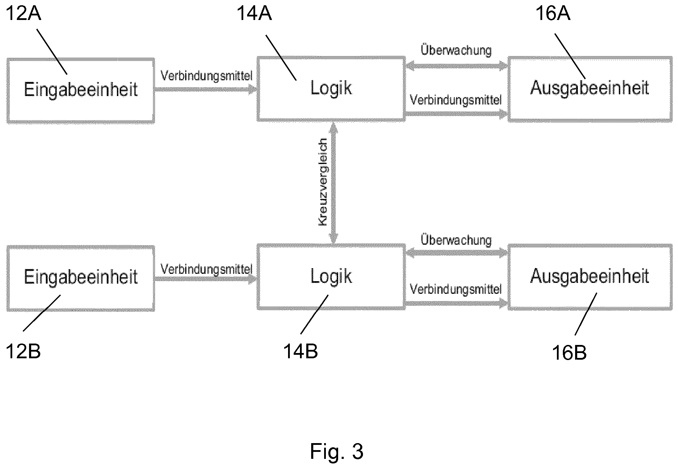

Ausgangspunkt der Erfindung ist eine generelle Anordnung, wie sie in der EN ISO 13849 (Maschinensicherheit) beschrieben wird. Danach lässt sich SIL-3 (Kat. 4; PL e) dadurch erreichen, dass das System mit mindestens zwei Signalpfaden ausgelegt wird, so dass die Integrität durch einen Kreuzvergleich der beiden parallelen Signalpfade erreicht werden kann, siehe Figur 3.

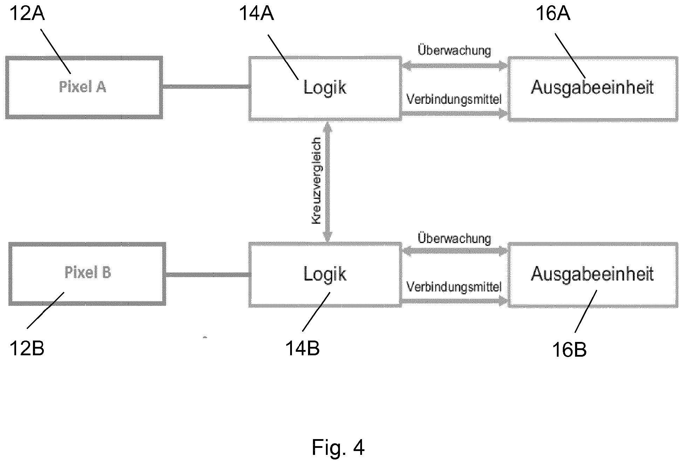

Gemäß dem in Figur 3 dargestellten Prinzipaufbau eines 3D-TOF-Senors 10 weist dieser zwei Eingabeeinheiten 12A und 12B auf, die von Pixeln gebildet sein können; vergleiche Figur 4. Die von den Eingabeeinheiten generierten Ausgangssignale also beispielsweise die Ausgangssignale der Pixel werden jeweils einer Logik 14A und 14B zugeführt, die die Ausgangssignale der Eingabeeinheit 12A bzw. 12B auswerten. Die Logiken 14A und 14B sind zum Zwecke eines Kreuzvergleichs miteinander verbunden. Im Rahmen des Kreuzvergleichs wird insbesondere geprüft, ob die Logik 14A und 14B jeweils das gleiche Ausgangssignal liefert. Falls der Kreuzvergleich positiv ausfällt werden die von den Eingabeeinheiten 12A und 12B erfasst und von den Logiken 14A und 14B verarbeiteten Signale an eine jeweilige Ausgabeeinheit 16A und 16B ausgegeben.

Der 3D-TOF-Sensor aus den Figuren 3 und 4 besitzt somit jeweils zwei parallele Signalpfade, von den einer von der Eingabeeinheit 12A, der Verarbeitungslogik 14A und der Ausgabeeinheit 16A gebildet wird, und von denen der zweite Signalpfad von der Eingabeeinheit 12B, der Verarbeitungslogik 14B und der Ausgabeeinheit 16B gebildet wird. Der erste Signalpfad bildet somit einen Kanal A und der zweite Signalpfad bildet einen Kanal B. Es wird nun vorgeschlagen, dieses parallele System auf einen 3D-TOF-Sensor anzuwenden.

Im Folgenden werden daher die Begriffe "Signalpfad" und "Kanal" synonym verwendet.

## Erste Erfindungsvariante

Im Rahmen der ersten Erfindungsvariante wird das oben beschrieben Prinzip mit mindestens zwei Pixeln (Pixel A und B) so angewendet, dass eine durchgehende parallele Verarbeitung mit einem Vergleich der Signalpfade A und B erreicht wird. Der Vergleich der Signale wird auf verschiedenen Ebenen der Signalverarbeitung durchgeführt, siehe Figur 4.

Alle Pixel A und B werden als Matrix in jeweils gleichen Zeilen, Spalten oder als Schachbrett angeordnet.

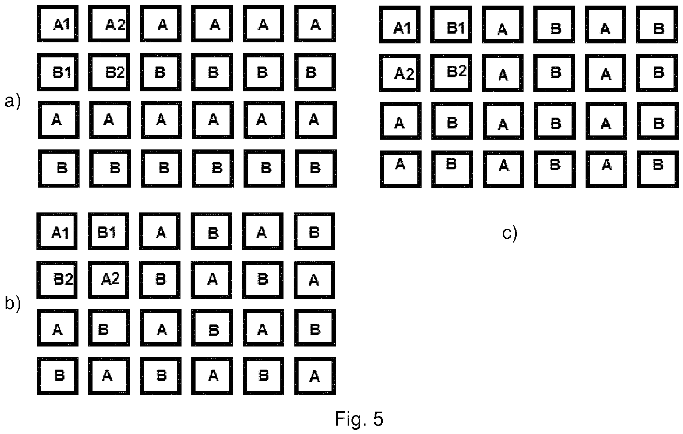

Die Signalpfade sind konsequent getrennt nach Kanal A und Kanal B ausgeführt. Das gilt sowohl für den analogen als auch für den digitalen Signalpfad, unabhängig davon, ob die in Silizium integrierte Empfängermatrix ausschließlich analog oder analog und digital ausgeführt wird, siehe Figur 5.

Es gibt also beide Möglichkeiten der Realisierung, nämlich die Integration ausschließlich der analogen Schaltungsteile im Silizium und Verwendung einer externen Logik auf einem FPGA oder die Vollintegration aller Komponenten in Silizium oder einem anderen Halbleitermaterial.

## Das optische Binning / Prüfung der Empfängerfunktion

Technisch bekannt ist die Zusammenfassung von mehreren Pixeln auf der Schaltungsebene. Dieses Verfahren wird verwendet um:

- die Auflösung zu verringern,
- die Bildgeschwindigkeit zu erhöhen oder
- die Empfindlichkeit zu verbessern und Reduktion des Rauschens

Als neu wird das optische Binning eingeführt, um sicherzustellen, dass Pixel A und B identische optische Leistungen (Abbildung) empfangen.

Das optische Binning kann dadurch erreicht werden, dass ein *homogenisierender Diffusor* über Pixel A und Pixel B angeordnet wird. Diese Anordnung kann so erfolgen, dass nur die jeweils beteiligten optisch empfindlichen Flächen (Fotoempfänger) von Pixel A und B optisch verbunden werden. Möglich ist aber auch den Diffusor über die gesamte Pixelgeometrie zu legen. Eine weitere Variante ergibt sich durch die Verwendung einer Mikrooptik, wie sie bereits vielfach zur Erhöhung des Füllfaktors in CMOS-Bildsensoren verwendet wird. Die Mikrooptik wird dann über den Diffusor angeordnet.

In einer weiteren Ausführungsvariante der ersten Erfindungsvariante können Diffusor und Mikrooptik auch in einem Element auf mikrooptischer Basis realisiert werden.

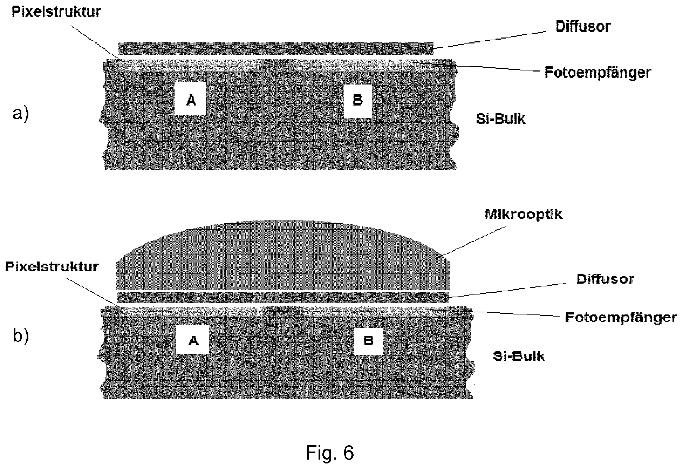

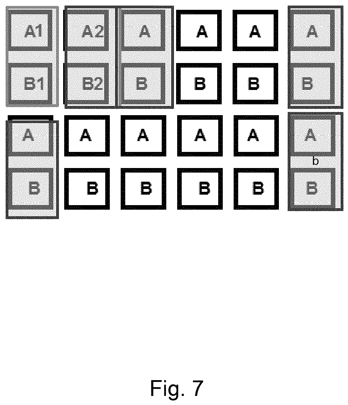

Bezogen auf die Matrixanordnung der Pixel A und B werden jeweils A1 und B1, A2 und B2 ... An und Bn miteinander optisch verbunden, vorausgesetzt wird dabei, dass der analoge Signalpfad von A1 und B1 bzw. A2 und B2, An und Bn zur Einhaltung gleicher Signallaufzeiten identisch in der Länge ausgeführt sind. Diese Anforderung gilt auch für die digitalen Ansteuersignale der Schalttransistoren der jeweils optisch *gebinnten* Pixel, siehe Figur 6 und Figur 7.

Die Funktionsfähigkeit der parallelisierten Fotoempfänger wird durch einen zusätzlichen Signalschritt geprüft. Ziel dieses Signalschrittes ist zu prüfen, ob die Kanäle A und B einen identischen Signalwert liefern. Diese Signalwerte müssen deutlich oberhalb des Rauschniveaus (Nullsignal) liegen.

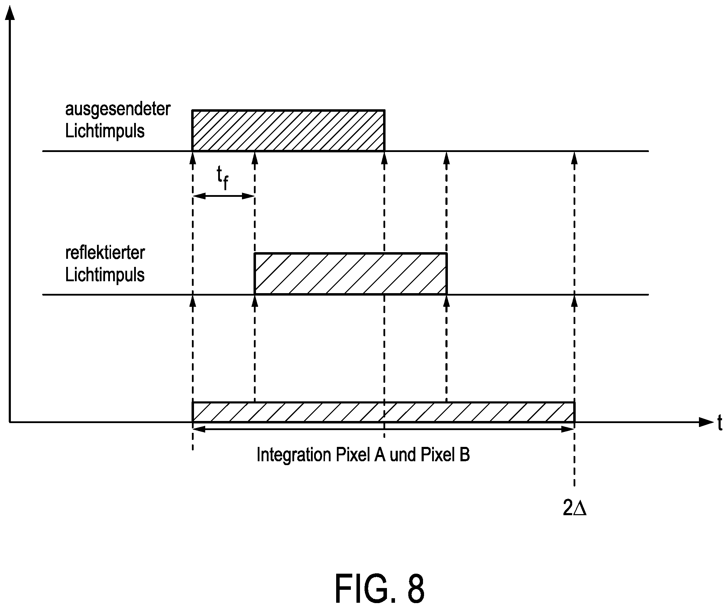

Erreicht wird das durch ein zeitgleiches Abtasten des reflektierten Lichtimpulses. Für den Zweiphasenmodus entspricht die Abtastzeit der doppelten Länge (siehe Figur 8) der Lichtimpulsdauer und im Vierphasenmodus genau der Länge der Lichtimpulsdauer. Auch in diesem Fall ist der Zyklus aus Senden und Abtasten des reflektierten Lichtimpulses vorzugsweise mehrfach zu wiederholen, solange bis eine ausreichende Ladungsmenge sowohl in den Speichern des Pixel A als auch B akkumuliert sind.

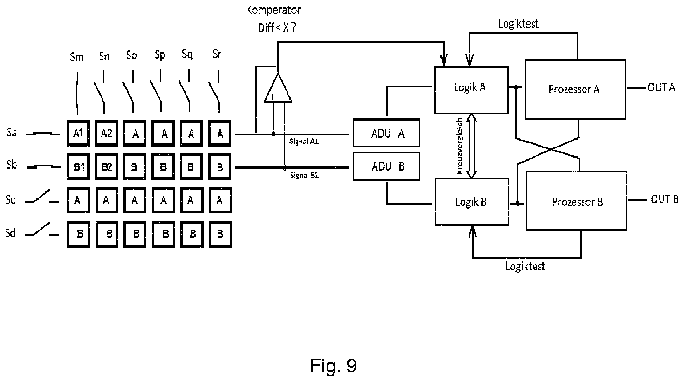

In Figur 9 ist das Schaltungsschema skizziert. Die Speicher der optisch *gebinnten* Pixel (A1 und B2) werden nach Ablauf der Integrationsphase zeitgleich ausgewählt und auf den Ausgang der Analogmatrix gelegt. Die Ladungsmengen der Pixel A1 und B1 werden ein erstes Mal im analogen Signalpfad vergleichen (z.B. durch die Verwendung eines Komparators). Geprüft wird, ob die Differenzspannung zwischen A und B unterhalb eines zuvor definierten Schwellwertes liegt. In Abhängigkeit von der Anzahl der im Pixel vorhandenen Speicher (Zweiphasen oder Vierphasen) kann dieser Zyklus einmal je Pixel oder zweifach erfolgen. Möglich ist es auch eine schaltungstechnische Parallelisierung der *Speicher a und b* zu realisieren.

Im Weiteren werden die Signalwerte in einem Analog-Digitalwandler (ADU A und ADU B; siehe Figur 9) digitalisiert und ein zweites Mal verglichen. Die Operationen können sowohl durch die nachfolgende Logik und/oder auch durch den der jeweiligen Logik A oder B nachfolgenden Prozessor A oder B erfolgen. Die Logik A und die Logik B unterscheiden sich von dem Prozessor A und dem Prozessor B durch die Form der Implementierung. Die Logiken sind Schaltungen, die die logischen Operationen auf Schaltungsebene verwirklichen und können beispielsweise in Form eines FPGA (Field Programmable Gate Array) vorliegen. Die Funktionsweise der Prozessoren ist hingegen durch eine Ablaufprogrammierung (z.B. in Form von Firmware) vorgegeben. Die Prozessoren können beispielsweise digitale Signalprozessoren sein (DSP).

Wird der definierte Differenzwert im analogen oder im digitalen Bereich überschritten, dann wird ein *Fail-Signal* im Logikblock ausgelöst und die *Bildaufnahme gestoppt.* Dieses Fail-Signal wird über den Signalpfad unmittelbar an die Prozessorschnittstellen (Output) übergeben.

Der Prozessor-Output in Verbindung mit einer sicheren Steuerung kann dann eine Maschine in den *sicheren Halt* führen, siehe Figur 9.

## Doppelte Ausführung der Beleuchtungsquellen / Prüfung der Funktionsfähigkeit der Sender

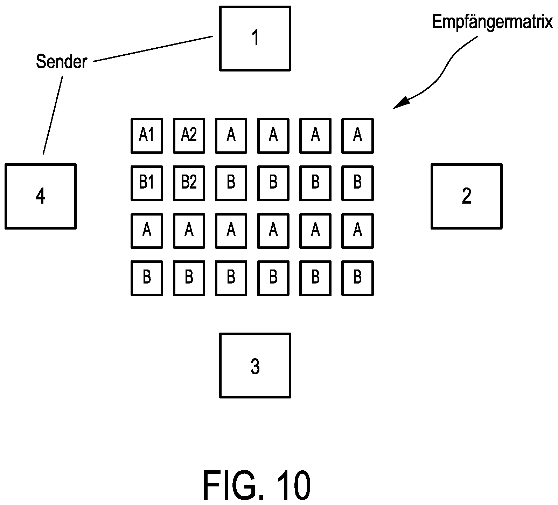

Sowie der Signalpfad doppelt ausgelegt wird, so wird auch die Beleuchtung eines 3D-TOF-Sensor mit *optisch gebinnten* Pixeln mindestens doppelt ausgelegt. Mindestens zwei Sendergruppen kommen wechselseitig zum Einsatz, siehe Figur 10.

Eine Sendergruppe besteht aus mindestens einem Sender. In Figur 10 ist die doppelte Ausführung der Sendergruppe dargestellt und jeweils durch zwei Sender repräsentiert. Die Sender 1 und 3 sowie 2 und 4 werden jeweils parallel und wechselseitig betrieben. Als Sender können LED oder Laserdioden verwendet werden (z.B. VCSEL), siehe Figur 10.

## Erweiterter Zyklus zur Prüfung der Senderfunktion

Durch das *optische Binning* und den zusätzlichen Signalschritt kann geprüft werden, ob Fotoempfänger und die Signalverarbeitungspipeline gleiche Signalwerte liefern. Die Gleichheit der Signalwerte kann über einen Differenzwert ermittelt werden, der unter einem festzulegenden Schwellwert liegen sollte.

In diesem Schritt kann keine Aussage über die Funktionsfähigkeit der Sender getroffen werden. Ein weiterer zusätzlicher Verarbeitungsschritt kann darüber Aufschluss geben.

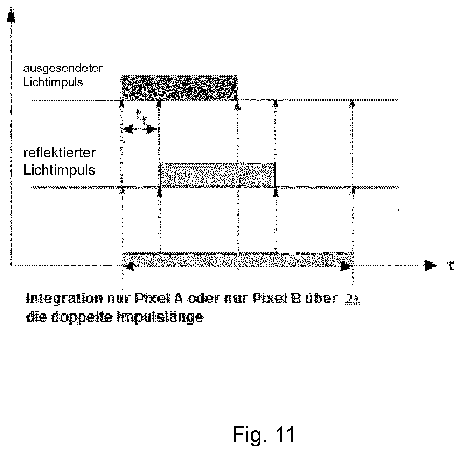

Wird anstelle des in Figur 8 beschriebenen gleichzeitigen Abtastens des reflektierten Lichtimpulses von Pixel A und Pixel B nur ein Pixel, d. h. entweder A oder B abgetastet, so entsteht bei der Differenzwertermittlung in der Komparaturstufe (analog) oder im digitalen Logikteil ein Signal oberhalb eines Schwellwertes, welches ein Maß für die Lichtmenge der aktivierten Sendergruppe liefert; siehe Figur 11.

Im laufenden Bildzyklus werden zur Überwachung der Signalpfade die Signalschritte entsprechend Figur 8 und Figur 11 der eigentlichen Bilderzeugung vorangestellt.

| Prüfen Sendergruppe 1 | Prüfen Empfänger | Bildprozess | Prüfen Sendergruppe 2 |
|---|---|---|---|

Die Sendergruppe 1 und die Sendergruppe 2 werden jeweils wechselseitig im Zyklus aktiviert.

## Alternativer Prüfmechanismus der Senderfunktion durch Aufspaltung der Senderwellenlängen

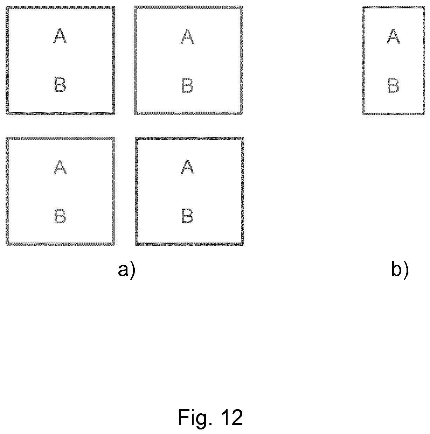

Eine besonders vorteilhafte Ausführung der durchgängigen Parallelität der Signalführung lässt sich dadurch erreichen, dass die Sendergruppen in unterschiedlichen Wellenlängen senden, während die Pixel A und Pixel B jeweils selektiv auf die jeweils unterschiedlichen Wellenlängen reagieren können, siehe Figuren 12a und 12b.

Der Vorteil dieses Verfahrens besteht darin, dass der mit Bezug auf Figur 11 beschriebene Signalschritt nicht iterativ einmal für die erste und für die zweite Sendergruppe erfolgen muss, sondern dass dieser Schritt gleichzeitig erfolgen kann, da beide Sendergruppen gleichzeitig aktiviert werden können und durch die Wellenselektivität der Empfänger selektiv erkannt werden können.

Das *optische Binning* erfolgt dann *wellenlängenselektiv.* D. h. eine typische Ausführung könnte die Nutzung von *Schmalbandfilter* und Homogenisierungsfunktion mit der Zentralwellenlänge 850nm sowie für die zweite Empfängergruppe mit einer Zentralwellenlänge 940nm sein.

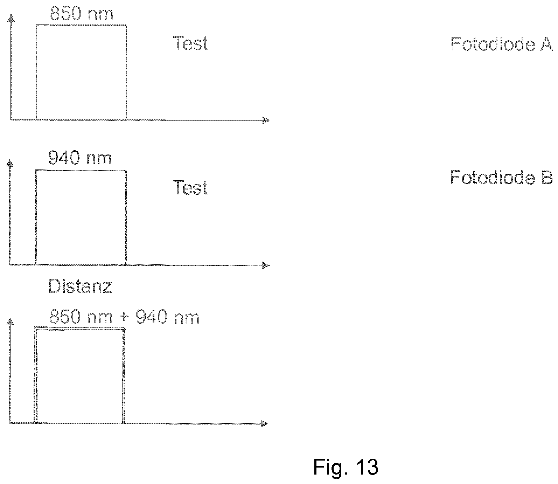

In einer besonderen Ausführung, könnten die optische empfindliche Fläche der Fotoempfänger so ausgelegt werden, dass die unterschiedlichen Quanteneffizienzen der verschiedenen Wellenlängen ausgeglichen werden (In Silizium fällt die Quanteneffizienz für 940nm gegenüber 850nm um etwa 30% ab). Eine größere empfindliche Fläche des Empfängers mit niedriger Quantenempfindlichkeit könnte den Nachteil ausgleichen, siehe Figur 13.

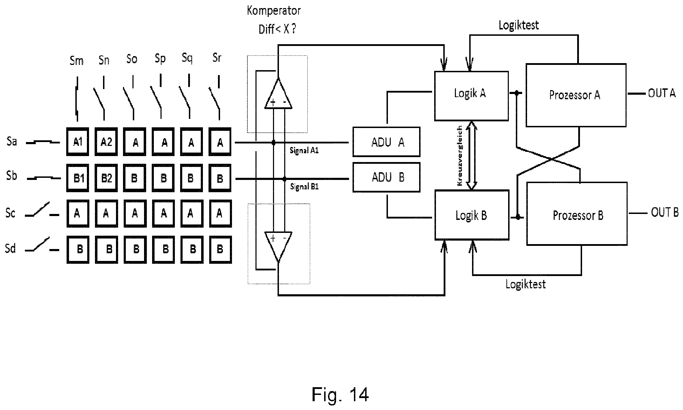

Figur 12 stellt verschiedene Anordnungen der wellenselektiven Lösung dar. In Figur 12a arbeiten jeweils A und B in beiden Wellenlängen. Die Funktionalität von A und B wird für jede Wellenlänge geprüft. Inder Konsequenz kann ein weiterer Komparator genutzt werden. Je nachdem welche Wellenlänge verwendet wird, verarbeitet entweder die Logik A oder die Logik B das Komparatorsignal (Figur 14)

Wird die Filter Anordnung gemäß Figur 12b verwendet und werden im Prüfschritt die Sendergruppen mit den zwei verschiedenen Wellenlängen gleichzeitig aktiviert, so kann die Senderprüfung und die Empfängerprüfung zeitgleich erfolgen. In dem das Differenzsignal am Komparatorausgang zwischen Kanal A und B kleiner als ein definierter Schwellwert ist, kann gefolgert werden, dass beide Sendergruppen und die Fotoempfänger beider Kanäle funktionsfähig sind.

### Funktion der Logiken A und B

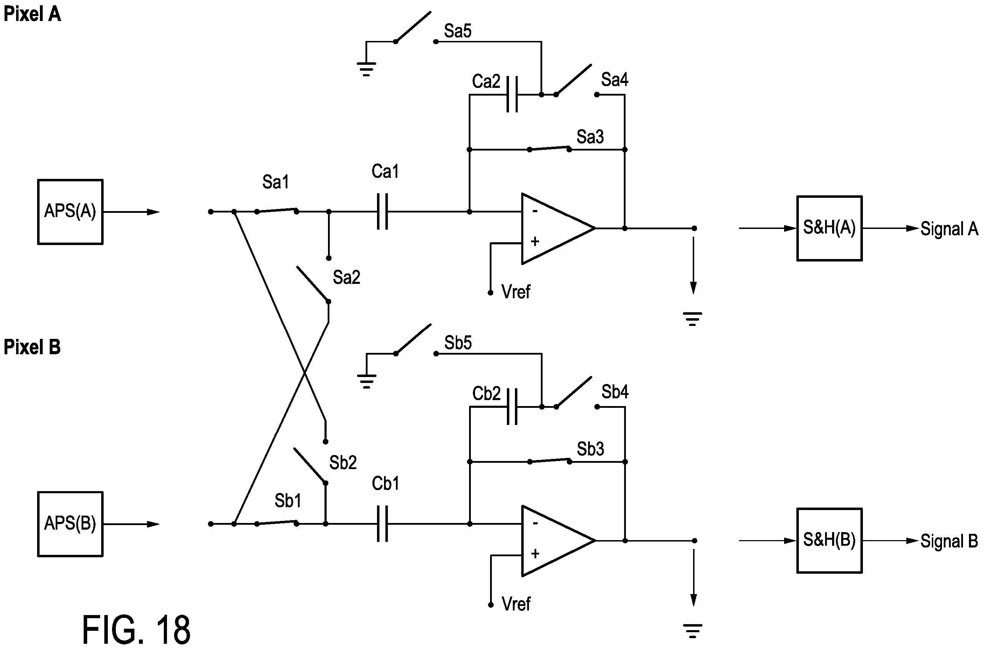

Die Logik A liefert die Steuersignale für die Fotoempfänger des Kanals A, also zum Beispiel zum Steuern der Schalter der in den Figuren 18 bis 20 dargestellten CDS-Stufe für den Signalpfad A. Die Logik B liefert die Steuersignale für die Fotoempfänger des Kanals B, also zum Beispiel zum Steuern der Schalter der in den Figuren 18 bis 20 dargestellten CDS-Stufe für den Signalpfad B. Durch eine Synchronisation der Logiken wird sichergestellt, dass jeweils die richtigen Pixelpaare im Readoutprozess adressiert werden. Die Validität der Signalwerte wird über das Komparatorsignal ermittelt.

In einem weiteren Verarbeitungsschritt wird das digitale Differenzsignal der Kanäle getrennt in jeder Logik berechnet. Die Logiken tauschen dafür die digitalisierten Kanaldaten aus, sofern diese als valide gelten. Übersteigt das digitalisierte Differenzsignal der Pixel A und B den Schwellwert, wird ein Fail-Signal an den entsprechenden Prozessor übertragen.

Beide Logiken berechnen unabhängig voneinander die Signalamplitudenwerte sowie die Abstandswerte. Die berechneten Werte der Logik A werden an den Prozessor A und die Werte der Logik B an den Prozessor B übergeben. Außerdem werden die berechneten Werte jeweils kreuzweise ausgeliefert. Jeder Prozessor führt dann einen Vergleich der Amplituden- und der Abstandswerte aus. Führt der Vergleich zu einer Abweichung so liefert der entsprechende Prozessor ein Fail-Signal aus.

### Funktionstest der Logiken

Zwischen den Bildzyklen senden die Prozessoren an die vorgelagerten Logiken einen digitalen Eingabewert (Zufallszahl). Die Logiken führen diese Zufallszahl in ihre Verarbeitungspipeline ein und berechnen darauf einen Ausgabewert, der durch eine Prozessorroutine je Prozessor auf Richtigkeit geprüft wird. Der Verarbeitungsprozess enthält den Austausch der Eingabewerte zwischen den Logiken. Der Prüfprozess je Logik rechnet also mit den Eingabewerten des Kanals A und des Kanals B.

Die Rechenfunktionen entsprechen den Operationen zur Ermittlung der Abstands- und der Amplitudenwerte. Im Fall das der Vergleich in einem Prozessor zu einem Fehler führt wird über den jeweiligen Prozessor ein Fail-Signal ausgegeben.

### Funktion der Prozessoren A und B

In einer ersten Ausführung führen beide Prozessoren jeweils die identischen Operationen aus. Jeder Prozessor verfügt über eigene Speicher und eigene Schnittstellen.

Der Ausgang OUT A und OUT B wird auf einer nachgelagerten Ebene (z.B. sicherheitsgerichtete Steuerung) verarbeitet.

In einer zweiten Ausführung, die insbesondere vorteilhaft für komplexe Bildverarbeitungs-operationen z. B. Bewegungsanalysen von Personen ist, wird für einen der Prozessoren (z. B. Kanal A) ein sicherheitsgerichteter Prozessor eingesetzt.

Ein sicherheitsgerichteter Prozessor verfügt intern selbst über eine parallelisierte rückwirkungsfreie Architektur. Solche Prozessoren sind bekannt (z.B. HICore 1 - https://www.hima.com/en/products-services/hicore-1/) und weisen z. B. einen s.g. 1oo2-Aufbau (one out of two) dar. Der Verarbeitungsprozess wird in diesem Fall in einen *safe-Prozess* und einen *non-safe Prozess* gesplittet.

Die Aufteilung soll an folgendem Beispiel erläutert werden.

Für die Überwachung eines Arbeitsraumes kommt es darauf an das Eindringen einer Hand in einen Sicherheitsbereich zu verhindern oder eine Maschine zu stoppen sofern eine Hand in den Bereich eindringt.

Da die Erkennung einer Hand bestimmte komplexe Bildverarbeitungsoperationen (Rechenzeit) benötigt teilt man den Prozess derart auf, dass ein bestimmter Bereich als dreidimensionale Sicherheitszone definiert wird. Der sicherheitsgerichtete Prozessor kontrolliert in der Folge nur die Lage der Punktwolke in der definierten im FOV (field of view) Sicherheitszone. Eine Abweichung (Verformung) der Punktwolke würde zu einem Fail-Signal führen. Die Überwachung der Lage der Punktwolke stellt eine verhältnismäßig einfache Operation dar.

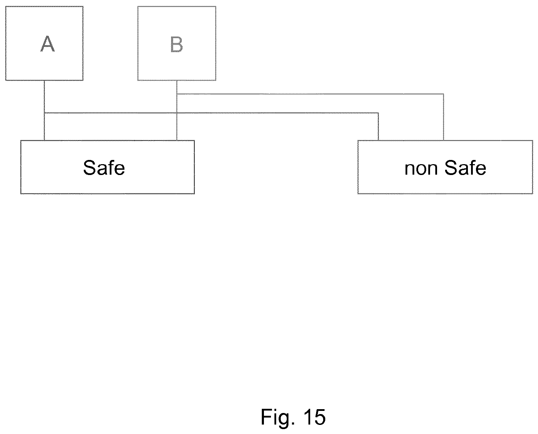

Auf dem anderen Prozessor wird untersucht, welches Objekt in die Sicherheitszone eingedrungen ist. Die entsprechenden Operationen sind komplex und werden mit modernen Hochsprachen implementiert. Handelt es sich um eine Hand so folgt daraus z. B. eine Anweisung an den Bediener, siehe Figur 15.

Es besteht außerdem die Möglichkeit den Operationsverstärker der CDS-Stufe durch eine Erweiterung der Schaltung auch als Komparator für den Vergleich der Signalwerte der Pixel A und Pixel B auf der analogen Pixelebene zu realisieren.

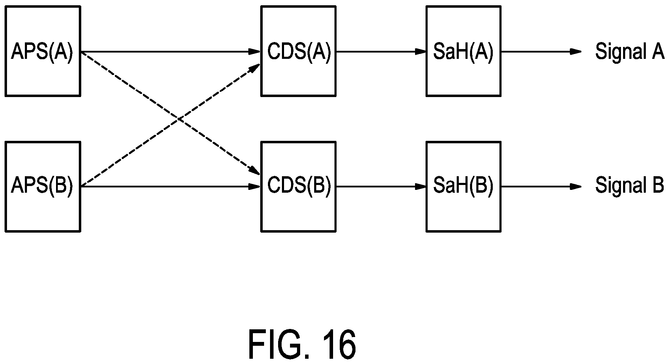

Figur 16 zeigt den Prinzipaufbau eines entsprechenden Bildsensors. In den nachfolgenden Figuren 18 bis 20 sind die CDS-Stufen in verschiedenen Schaltzuständen detaillierter dargestellt.

Ein Pixel wird hier beispielhaft aus einer APS-Zelle, einer CDS- und einem Sample und Hold-stufe (in den Figuren mit S&H gekennzeichnet) aufgebaut.

Die CDS-Stufe dient einerseits als Akkumulator für die notwendigen Mehrfachbelichtungen und gleichzeitig als Stufe zur Unterdrückung der Rauschanteile aus dem Reset der Fotodiode der APS-Zelle als auch der Abtrennung von Hintergrundlicht.

Neu wird nun der Kreuzvergleich mit dem Nachbarpixel gemäß bereits erläuterten Abfolge in der CDS-Stufe eingeführt.

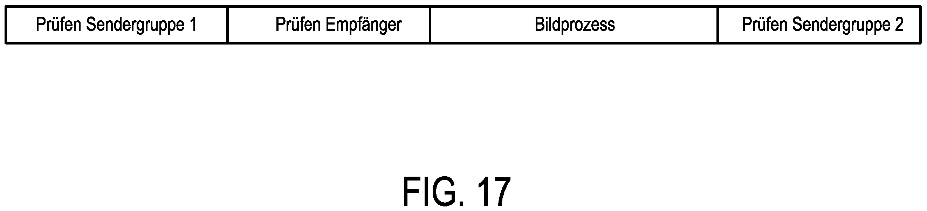

Figur 17 illustriert den Zyklus des Auslesens.

Die Funktionsweise lässt sich gut an Hand der Funktion der CDS-Stufe erläutern.

**Phase 1:**

Im Pixel A - die Schalter S1a, S3a sind geschlossen, die Schalter S2a, S4a und S5a sind geöffnet.

Im Pixel B - die Schalter S1b, S3b sind geschlossen, die Schalter S2b, S4b und S5b sind geöffnet.

Wir erhalten folgende Verhältnisse:

Im Pixel A:

$$Q'1a = C1a\,(Va - Vref)\;;\quad Q'2a = C2a(Vref\text{-}Vouta(n))$$

Im Pixel B:

$$Q'1b = C1b\,(Vb - Vref)\;;\quad Q'2b = C2b(Vref\text{-}Voutb(n))$$

Figur 18 zeigt Pixel A und Pixel B in einem ersten Schaltzustand der CDS-Stufen, den diese in Phase 1 annehmen.

**Phase 2:**

Im Pixel A - die Schalter S2a, S4a sind geschlossen, die Schalter S1a, S3a und S5a sind geöffnet.

Im Pixel B - die Schalter S2b, S4b sind geschlossen, die Schalter S1b, S3b und S5b sind geöffnet.

Im Pixel A:

$$Q''1a = C1a\,(Vb - Vref)\;;\quad Q''2a = C2a(Vref\text{-}Vouta(n+1))$$

Im Pixel B:

$$Q''1b = C1b (Va – Vref) ; \quad Q''2b = C2b(Vref-Voutb(n+1))$$

Durch den Knotensatz lässt sich dann schreiben:
Im Pixel A:

$$Q'1a + Q'2a = Q''1a + Q''2a$$

Setzt man die Beziehungen für die Ladungen in diese Gleichung ein erhält man nach einer entsprechenden Umformung folgendes Ergebnis:

$$Vouta(n+1) = C1a(Vb-Va) + C2aVout(n)$$

Äquivalent dazu erhält man das Verhältnis am Ausgang des Pixel B

$$Voutb(n+1) = C1b(Va-Vb) + C2bVout(n)$$

Die Phase 1 und Phase zwei werden ein mehrfaches (N-mal) wiederholt um eine ausreichende Ausgangsspannung auf dem Kondensator C2a bzw. C2b zu erreichen.

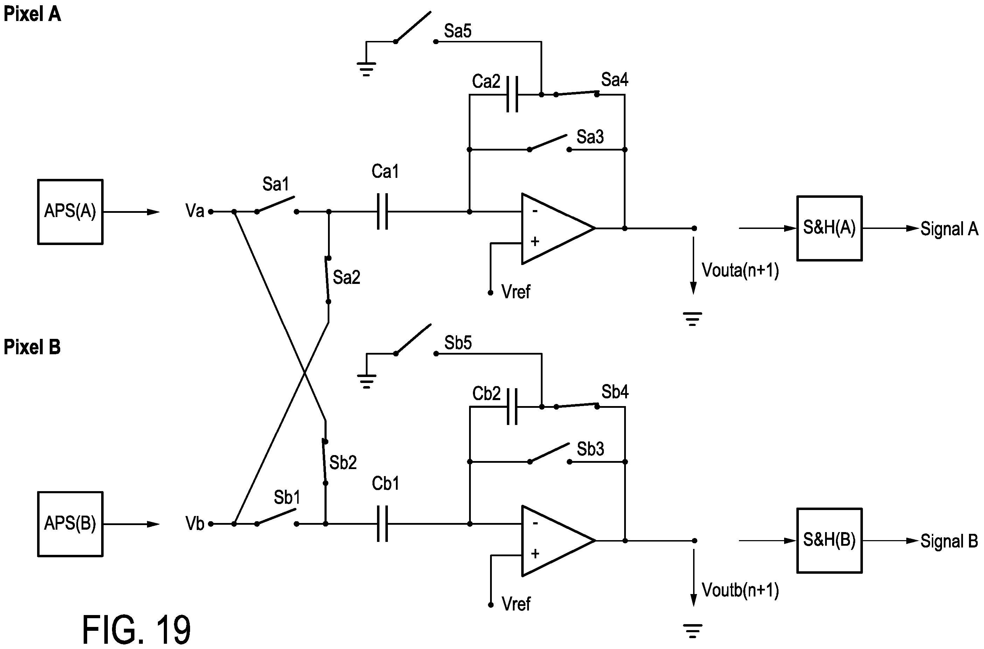

Figur 19 zeigt Pixel A und Pixel B einem zweiten Schaltzustand der CDS-Stufen, den diese in Phase 2 annehmen.

**Phase 3** - **Prüfungsphase**

Alle Schalter sind geöffnet nur die Schalter Sa5 und Sb5 sind geschlossen. In dieser Phase wirkt der Operationsverstärker als Komparator in beiden Pixeln.
Dabei wird die resultierende Spannung auf den Kondensatoren Ca2 und Cb2 jeweils mit der Referenzspannung verglichen.

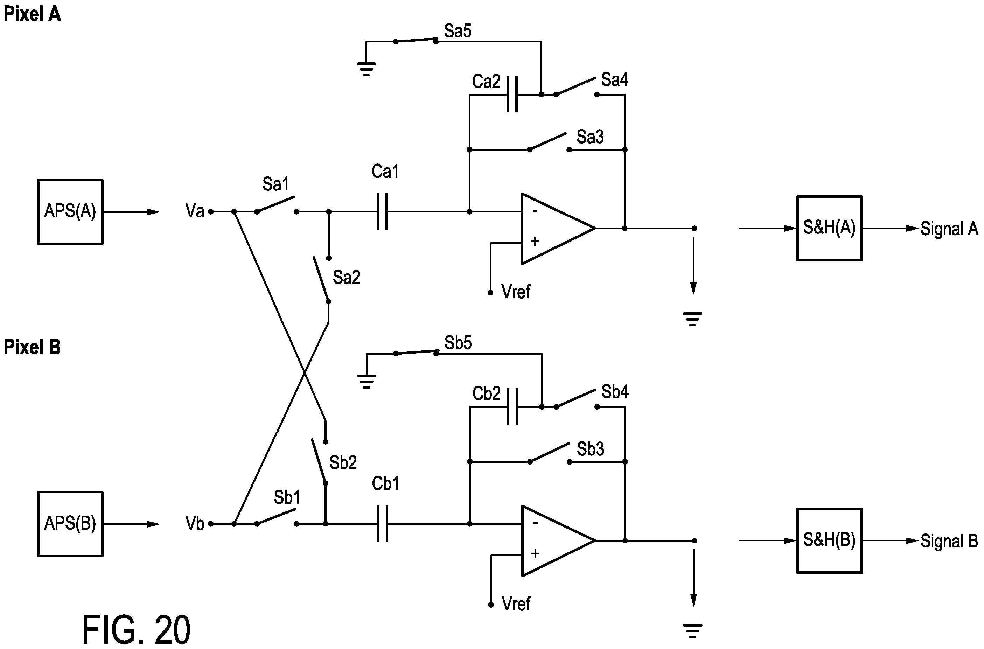

Figur 20 zeigt Pixel A und Pixel B einem dritten Schaltzustand der CDS-Stufen, den diese in Phase 3 annehmen.
Über der Kapazität Ca2 liegt die mehrfach akkumulierte Differenzspannung Vb-Va an.
Über der Kapazität Cb2 liegt die mehrfach akkumulierte Differenzspannung Va-Vb an.
Wir vergleichen dann 3 Fälle.

1. N x Vouta(n+1) = N x Voutb(n+1) - das ist wäre der ideale Fall, wenn Pixel A und Pixel B den gleichen Wert liefern würden. Dieser ideale Fall hat nur theoretischen Charakter auf Grund der physikalischen Eigenschaften realer Bauteile.

2. N x Vouta(n+1) ≈ N x Voutb(n+1) - Der Wert am Ausgang von Pixel A und Pixel B sind in etwa gleich. Einer der Werte ist etwas höher oder etwas niedriger als der andere. In diesem Fall können beide Pixel als funktionsfähig angesehen werden.

Auf beiden Ausgangsleitung des Komparators erscheint eine logische 0.
3. N x Vouta(n+1) ≠ N x Voutb(n+1) - Der Ausgangswert von Pixel A ist entweder viel größer oder viel kleiner als der Ausgangswert von Pixel B. Ein Pixel ist als defekt anzusehen.
In diesem Fall würde am Pixelausgang A eine logische 1 anliegen, wenn Vb>> Va ist.
Im Fall Vb<<Va würde eine logische 1 auf dem Ausgang des Pixel B liegen.
Nach dem Vergleich wird die CDS-Stufe zurückgesetzt und ein neuer Zyklus kann starten.
Die Steuerung der Schalter der jeweiligen CDS-Stufe erfolgt durch die dem entsprechenden Signalpfad zugeordnete Logik A bzw. B.

**Zusätzlicher Betriebsweise:**

Die eingeführte Differenzbildung Vb-Va und Va-Vb, lässt sich sehr vorteilhaft auch in einem 4-Phasenbetrieb einsetzen. In diesem Fall kann man die Differenzbildung für die Berechnung des Phasenwinkels nutzen ohne die Einzelwerte auszulesen, wie weiter oben beschrieben ist, indem die Phasenverschiebung φ wie folgt berechnet wird:

$$\varphi = \tan^{-1} \frac{Aa - Ab}{Ba - Bb}$$

Voraussetzung ist die Nutzung zweier weiterer Pixel. So dass eine Gruppe von vier Pixeln oder eine Gruppe von zwei Pixeln aber mit insgesamt vier Speicherzellen eine vollständige 4-Phasenarchitektur ergibt.

### Zweite Erfindungsvariante

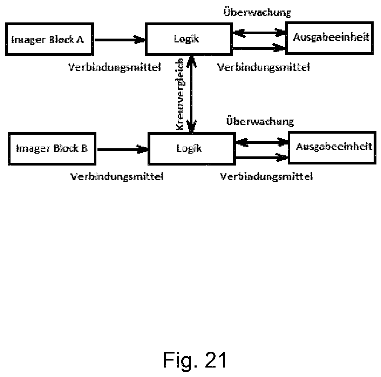

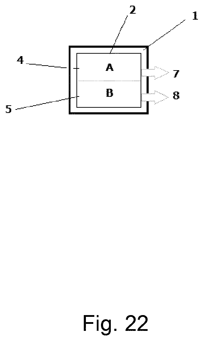

Gemäß einer zweiten Erfindungsvariante werden Bildaufnehmer (Imager) z. B. in CMOS-Technologie mit hoher Auflösung vorzugsweise mit mehreren parallelen Auslesekanälen eingerichtet; siehe Figur21. Das Ziel dieser Architektur ist es eine hohe Bildrate trotz hoher Auflösung zu erzielen. Die Auslesekanäle fassen in der Regel entweder mehrere Zeilen oder mehrere Spalten einer Bildaufnehmermatrix zusammen. Wir bezeichnen im Weiteren eine solche Zusammenfassung als einen Block oder als Imager Block; siehe Figur 22.

Im Einzelnen zeigt Figur 22:

1 - Bildaufnehmer,
2 - optisch empfindliche Fläche,
4 - Imager Block A mit Spektralfilter A,
5 - Imager Block B mit spektral Filter B,
7 - Auslesekanal für den Imager Block A,
8 - Auslesekanal für den Imager Block B.

Die zweite Erfindungsvariante macht sich diese Aufteilung des Bildfeldes in Ausleseblöcken zu Nutze.

Die weitere Erfindungsvariante wird im Folgenden an einem ersten Ausführungsbeispiel näher erläutert.

Das Bildfeld, welches vorzugsweise eine sehr hohe Auflösung besitzt z. B. 1280 x 1024 Bildpunkte wird entsprechend der angelegten Auslesekanäle in Blöcke aufgeteilt. Jeder Ausleseblock arbeitet mit einem Globalshutter, der separat ausgelöst werden kann.

Jedem Block wird weiterhin eine eigene Abbildungsoptik zugeordnet. Der Abstand zwischen den Optiken ist sehr gering, so dass eine Parallaxe bereits in einem geringen Objektabstand auf der Bildseite nicht mehr aufgelöst wird. D. h. auf jedem Block wird das gleiche Abbild der Objektseite erzeugt.

Diese Anordnung aus Optik und Bildaufnehmer wird in einer parallelisierte Auslese- und Bildverarbeitungsschaltung gemäß Figur 4 eingesetzt.

### Berechnung eines Tiefenbildes:

Das Ausführungsbeispiel geht von einem zweikanaligen Aufbau aus. Der Bildaufnehmer (Imager) ist aufgeteilt in den Block A und den Block B. Im vorliegenden Ausführungsbeispiel hat jeder Block 640 x 1024 Bildpunkte. Die digitalen Auslesekanäle für Block A und Block B sind auf die entsprechenden Logiken A und B geführt. Dabei ist es unerheblich, ob diese Logikblöcke bereits Teile einer integrierten Schaltung oder eine externe Logikschaltung z. B. ein FPGA beinhalten.

Die Logiken A und B steuern die jeweiligen Globalshutter-Signale und entsprechend auch die Beleuchtung LA und LB. Die Beleuchtungsquellen werden synchron betrieben. Beide Quellen werden zeitgleich mit dem Globalshuttersignal des Block A zum Zeitpunkt t0 für die Dauer ti=tA ausgelöst. Der Lichtimpuls wird an einem Target reflektiert und von allen Empfängern A, des Blocks A um die Flugzeit tof versetzt registriert. Die aus der Registrierung des Lichtimpulses resultierende Ladungsmenge (Fotoelektronen) werden auf der zu jedem Empfänger gehörigen Speicherkapazität (A1) abgelegt. Die Empfänger des Block A können nur einen Teil des reflektierten Lichtimpulses aufnehmen, der proportional der Zeitdifferenz tA-tof entspricht.

Mit einer Zeitverzögerung t0+tA wird der Globalshutter der Empfänger des Block B aktiviert. Der Empfänger B ist für die Zeit tB aktiv (im Beispiel tA=tB). Der Empfänger registriert ebenfalls nur einen Teil des reflektierten Lichtimpulses, welcher proportional der Zeitdifferenz tof+ti-tA (wenn ti=tA ist dies tof) entspricht. Die entsprechenden Ladungsmengen werden auf der zu jedem Empfänger des Block B gehörigen Speicherkapazität B1 abgelegt.

Da die reflektierten Signale in Abhängigkeit vom Reflexionsgrad des Targets und der Entfernung sehr schwach seien können, ist es notwendig einen Verstärkungsmechanismus vorzusehen. Dieser wird dadurch erreicht, dass die oben beschriebene Messung vielfach wiederholt wird und die jeweils registrierte Ladungsmenge auf den dazugehörigen Speicherkapazitäten akkumuliert wird, bis eine ausreichende Signalhöhe erreicht wird. Dieser Vorgang kann z. B. 100-mal wiederholt werden.

Im Ergebnis liegt in den Speicherkapazitäten A1 des Block A ein Bild für die Zeitspanne t0 bis tA vor während in den Speicherkapazitäten B1 ein Bild für die Zeitspanne tA bis tB vorliegt.

Diese beiden Bilder werden über den jeweiligen Auslesekanal an die jeweilige Logik übertragen. Anschließend tauschen die Logiken die Bildinformation kreuzweise aus und errechnen jeweils separat pixelweise das Tiefenbild nach den o. g. Vorschriften:

$$Q1 = A / (A + B)$$

(durch Quotientenbildung Eliminierung der Abhängigkeit vom Reflexionsgrad)

$$Q2 = B / (A + B)$$

$$tof1 = (1 - Q1) *T$$

$$tof2 = Q2*T$$

$$tof = ½ (tof1 + tof2)$$

(Mittelwert)

$$S = ½ (c * tof)$$

Dabei wird die Rechenvorschrift so angewendet, dass Pixel immer entsprechend ihrer Position in der Empfängermatrix verrechnet werden. Also A0,0 mit B0,0; A0,1 mit B0,1; .... Am,n mit Bm,n gemäß der gewählten Anordnung:

$$A0,0 ….. A0,n$$

$$. ……. .$$

$$Am,0 …. Am,n$$

$$B0,0 …... B0,n$$

$$. ……. .$$

$$Bm,0 ….. Bm,n$$

Am Ende der Berechnung, enthalten beide Logiken jeweils ein Abstandsbild. Beide Abstandsbilder sollten bis auf einen temperaturabhängigen Kalibrierfaktor, der einmalig bestimmt werden kann, identisch sein.

**Prüfung der Funktion durch Vergleich des Tiefenbildes:**

Die Identität der beiden Tiefenbilder A und B wird in einer weiteren Operation durch pixelweisen Vergleich geprüft. Dieser Vergleich kann auf beiden Logiken oder auf den nachgeschalteten Prozessoren erfolgen.
Es kann für den Vergleich ein Schwellwert definiert werden, wie viele Pixelpaare von einem definierten erwarteten Vergleichswert abweichen dürfen. Der Schwellwert definiert ob das Pixelpaar gleiche Werte liefert oder nicht und was als gleich bzw. ungleich anzusehen ist. Außerdem kann die Anzahl der ungleichen Paare als Entscheidungsparameter genutzt werden
Wird der definierte Schwellwert wenigstens auf einem Prozessor überschritten so erzeugt wenigstens einer der Prozessoren ein Fail-Signal am Ausgang.
Der Vergleich der Tiefenbilder A und B summiert bereits mehrere Vergleichsfunktionen auf. Dazu zählen die Pixelempfindlichkeit, die Gatefunktionen (Integration/Akkumulation), das Readout, die ADU und die Logikoperationen.
Die Gültigkeit der vollständigen Funktionsfähigkeit der Pixelmatrix lässt sich auch durch einen pixelweisen Vergleich eines Amplitudenbildes erreichen.

**Prüfung der Funktion der Pixelmatrix im 2D-Amplitudenbild:**

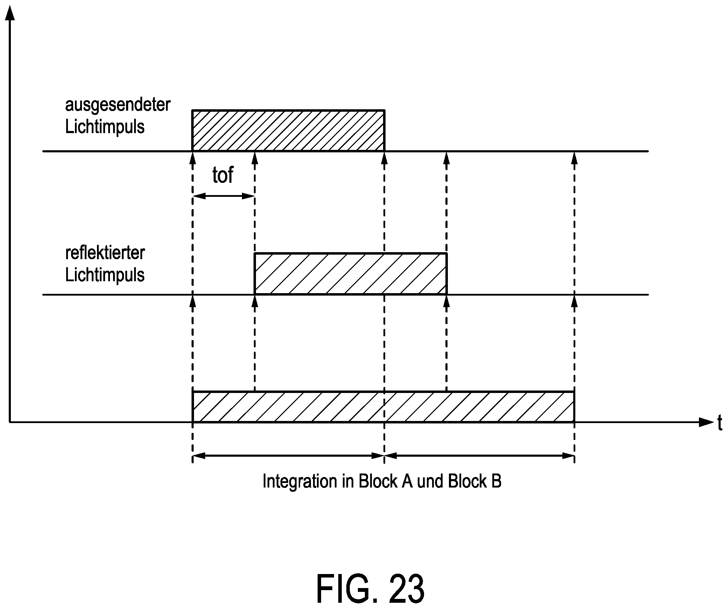

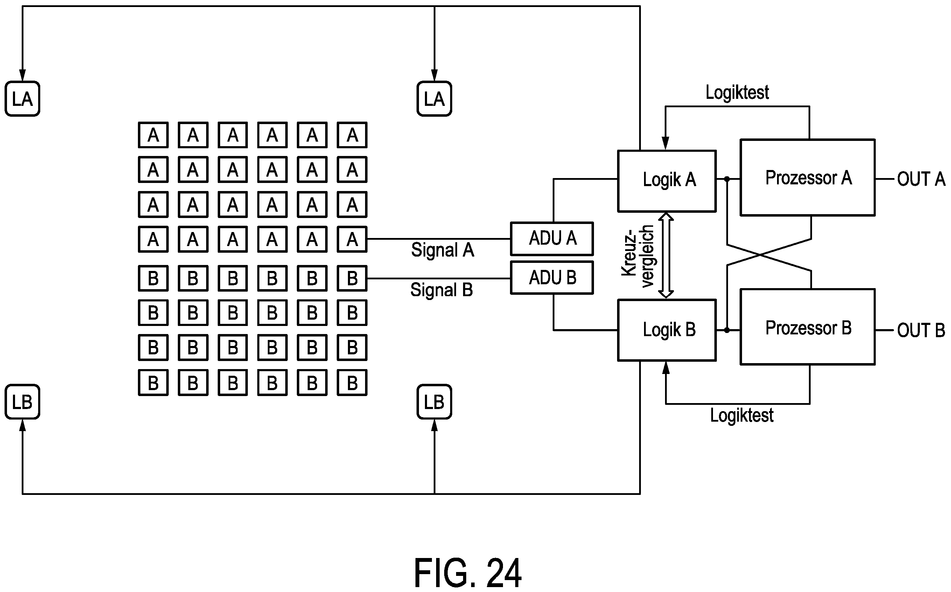

Genau wie auf Pixelebene (siehe weiter vorne und Figuren 8 und 9) kann die Prüfung der Funktion der Pixelmatrix im 2D-Amplitudenbild auch auf Blockebene durchgeführt werden; siehe Figuren 23 und 24. Erreicht wird das durch die zeitgleiche Abtastung des reflektierten Lichtimpulses sowohl in Block A als auch in Block B. Auch in diesem Fall ist der Zyklus aus Senden und Abtasten des reflektierten Lichtimpulses mehrfach zu wiederholen, solange bis eine ausreichende Ladungsmenge sowohl in den Speichern der Pixel des Block A als auch des Block B akkumuliert sind.

Nach Abschluss des Akkumulationszyklus werden die Bilder in Block A und B ausgelesen und auf beiden Logiken pixelweise verglichen. Die Vergleichswerte können sowohl in der Logik als auch auf den nachgeschalteten Prozessoren bewertet werden.

Es kann für den Vergleich ein Schwellwert definiert werden, der bestimmt, ob die Pixel als gleich oder als ungleich angesehen werden müssen. Außerdem kann definiert werden, wie viele Pixelpaare voneinander mit einer definierten Spanne abweichen dürfen (ungleich sind) bevor das Fail-Signal erzeugt wird. Wird der definierte Schwellwert wenigstens auf einem Kanal überschritten so erzeugt von wenigstens einer der Prozessoren ein Fail-Signal am Ausgang.

**Prüfung der Beleuchtungsquellen:**

Der beschriebene Prüfzyklus eignet sich in gleicherweise für die Prüfung der Beleuchtungsquellen. In dem Ausführungsbeispiel werden insgesamt 4 Beleuchtungsquellen verwendet. Jeweils zwei werden im Ausführungsbeispiel durch die Logik des Kanal A bzw. Kanal B angesteuert.

Die Beleuchtungsquellen lassen sich nun dadurch prüfen, dass in jedem Prüfzyklus entweder die Quellen des Kanal A oder die Quellen des Kanal B verwendet werden.

Im Gegensatz zum Vergleich der Empfängersignalwerte durch einen Kreuzvergleich, erfolgt der Vergleich der Beleuchtungsquellen durch einen seriellen Vergleich im jeweiligen Kanal.

Der Ablauf der Prüfung erfolgt im vorliegenden Ausführungsbeispiel wie folgt:

1. Starten eines Lichtimpulses mit der doppelten Länge im Vergleich zur Tiefenbildaufnahme (z. B. 60ns) der Beleuchtungsquelle des Kanals A.

2. Gleichzeitiges Starten der Globalshutter in beiden Blöcken A und B mit der doppelten Länge des Lichtimpulses (z. B. von 120ns).

3. Speichern der Bilder des Block A (Bild A0) und des Block B (Bild B0) in den Logikblöcken der jeweiligen Kanäle.

4. Starten eines Lichtimpulses mit der doppelten Länge im Vergleich zur Tiefenbildaufnahme (z. B. 60ns) der Beleuchtungsquelle des Kanals B.

5. Gleichzeitiges Starten der Globalshutter in beiden Blöcken A und B mit der doppelten Länge des Lichtimpulses (z. B. von 120ns).

6. Speichern der Bilder des Block A (Bild A1) und des Block B (Bild B1) in den Logikblöcken der jeweiligen Kanäle.

7. Es wird jeder Pixelwert A(i,j) aus der A-Teilmatrix und jeder Pixel B(i,j) aus der B-Teilmatrix bei Belichtung mit der LA-Quelle verglichen mit den entsprechenden Werten aus der Belichtung mit der LB-Quelle. Es wird ein maximaler Differenzwert definiert. Bei Überschreitung dieses Wertes liegt ein Defekt vor und ein Fail-Signal kann ausgelöst werden. Es ist auch denkbar, das Fail-Signal erst bei Überschreitung des Differenzwertes bei einer vorgegebenen Anzahl von Pixelpaaren auszulösen. Die Vergleichswerte können sowohl in der Logik als auch auf den nachgeschalteten Prozessoren bewertet werden.

Die Erfindung wird an einem zweiten Ausführungsbeispiel erläutert.

Wie im ersten Ausführungsbeispiel wird das Bildfeld, welches vorzugsweise eine sehr hohe Auflösung besitzt z. B. 1280 x 1024 Bildpunkte entsprechend der angelegten Auslesekanäle in Blöcke aufgeteilt. Im Unterschied zum ersten Ausführungsbeispiel wird jeder Ausleseblock nochmals unterteilt. D. h. jeder Ausleseblock arbeitet mit zwei Globalshuttern, die separat ausgelöst werden können.

Jedem Subblock (Aa, Ab, Ba, Bb) wird weiterhin eine eigene Abbildungsoptik zugeordnet. Der Abstand zwischen den nun vier Optiken ist sehr gering, so dass eine Parallaxe bereits in einem geringen Objektabstand auf der Bildseite nicht mehr aufgelöst wird. D. h. auf jedem Subblock wird das gleiche Abbild der Objektseite erzeugt.

Diese Anordnung aus Optik und Imager wird in eine parallelisierte Auslese- und Bildverarbeitungsschaltung gemäß Figur 24 eingesetzt.

Berechnung eines Tiefenbildes:

Das Ausführungsbeispiel geht weiterhin von einem zweikanaligen Aufbau aus. Der Bildaufnehmer (Imager) ist jetzt aber in den Block Aa und Ab und den Block Ba und Bb aufgeteilt. Im vorliegenden Ausführungsbeispiel hat jeder Block 640 x 512 Bildpunkte. Die digitalen Auslesekanäle für Block A und Block B sind auf die entsprechenden Logiken A und B geführt.

Die Logiken A und B steuern die jeweiligen Globalshutter-Signale und entsprechend auch die Beleuchtung LA und LB. Die Beleuchtungsquellen werden synchron betrieben.

Während im ersten Ausführungsbeispiel eine Signalabtastung mit zwei Integrationszeiträumen beschrieben ist (2-Phasen) wird nun das Signal vierfach abgetastet, dabei werden die Abtastpunkte jeweils um ¼ der Periode des Signals versetzt.

Bezogen auf das Ausführungsbeispiel mit einem Lichtimpuls der Länge 30ns würde sich daraus eine Abtastfolge ergeben, die wie folgt beschrieben werden könnte: Subblock Aa von 0 bis 30ns, für den Subblock Ba 30ns bis 60ns, für den Subblock Ab 60ns bis 90ns und für den Subblock Bb 90ns bis 120ns; siehe auch Figur 2.

Die dargestellten Beziehungen gelten auch dann, wenn als periodisches Signal eine sinusförmige Form gewählt wird.

Da die reflektierten Signale in Abhängigkeit vom Reflexionsgrad des Targets und der Entfernung sehr schwach seien können, ist es notwendig den bereits oben beschriebenen Verstärkungsmechanismus vorzusehen. Dieser wird dadurch erreicht, dass die Messung vielfach wiederholt wird und die jeweils registrierte Ladungsmenge auf den dazugehörigen Speicherkapazitäten der Pixel in den Subblöcken akkumuliert wird, bis eine ausreichende Signalhöhe erreicht wird. Dieser Vorgang kann z.B. 100-mal wiederholt werden.

Im Ergebnis liegt in den Speicherkapazitäten der Pixel der Subblöcke jeweils ein Bild für je ein Viertel der Periode vor. Daraus lässt sich nach folgender Regel die Phase und damit der Abstand S je Pixel berechnen.

$$\varphi = \tan^{-1}\,\ni\,(Ba-Bb)/(Aa-Ab)\,\rightleftharpoons$$

$$S = (\varphi*T)/(2\pi)$$

T - ist in diesem Fall die Periode des periodischen Signals.

Strenggenommen gilt die Berechnung des Phasenwinkels nur für sinusförmige Signale. Bei Rechtecksignalen sind entsprechende Korrekturen für eine hohe Linearität der Abstandskennlinie anzuwenden. Eine Möglichkeit zur Verbesserung der Linearität der Abstandskennlinie bei einer 4-Phasenabtastung lässt sich u.a. durch die Abtastung mit T/2 erzielen.

Die im ersten Ausführungsbeispiel beschriebenen Prüfvorgänge werden genauso ausgeführt.

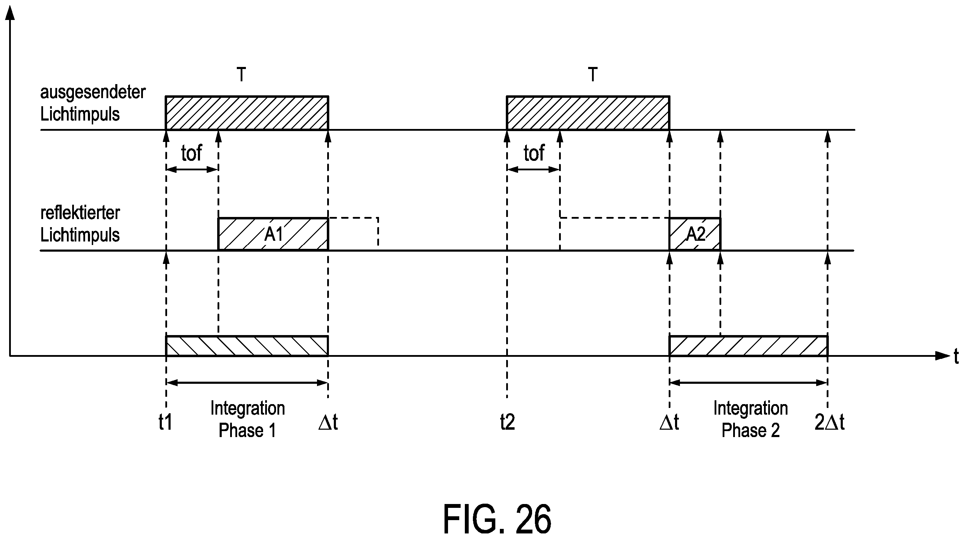

Im Weiteren erläutern wir ein drittes Ausführungsbeispiel, welches in Figur 26 abgebildet ist.

Anders als in den vorangegangenen Beispielen haben wir für die gesamte Pixelmatrix nur ein Globalshutter zur Verfügung. Während bei den vorangegangenen Ausführungsbeispielen fürdie Phasen des Tiefenbildes zwei Globalshutter genutzt wurden (siehe Figuren 1, 8, 11 und 23), so dass zwei Phasenbilder gleichzeitig (parallel) aufgenommen werden können, liegt dem in Figur 26 dargestellten Ausführungsbeispiel ein Bildaufnehmer mit nur einem einzigen Globalshutter zugrunde. In diesen Fall müssen die beiden Phasenbilder nacheinander (seriell) aufgenommen wurden, wie Figur 26 illustriert. Im Übrigen kann der gleiche optische Aufbau, wie im ersten Ausführungsbeispiel vorgesehen sein. Die Pixelmatrix wird entlang der beiden Auslesekanäle in zwei Blöcke A und B aufgeteilt. Jedem Block wird eine eigene Abbildungsoptik zugeordnet. Der Abstand zwischen den beiden Optiken ist sehr gering, so dass eine Parallaxe bereits in einem geringen Objektabstand auf der Bildseite nicht mehr aufgelöst wird. D.h. auf jedem Block wird das gleiche Abbild der Objektseite erzeugt.

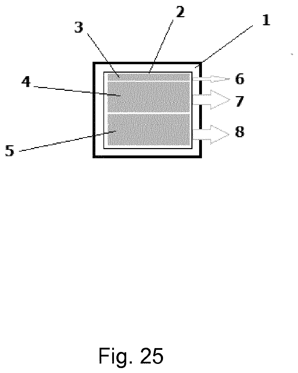

Im Unterschied zu dem ersten Ausführungsbeispiel erhält jeder Block zusätzlich ein optisches Filter bzw. ein System aus Filtern. Das Filter oder das Filtersystem begrenzt die durchgelassen Wellenlänge jedes Blockes auf ein schmales spektrales Band, welches jeweils mit der Quellenwellenlänge der zugeordneten Lichtquelle übereinstimmt; siehe Figur 25.

Das Ausführungsbeispiel in Figur 25 unterscheidet sich von dem aus Figur 22 durch einen zusätzlichen optischen Kanal 3 und einen zusätzlichen Auslesekanal 6. Im Einzelnen zeigt Figur 25:

1 - Bildaufnehmer,
2 - optisch empfindliche Fläche,
3 - zusätzlicher optischer Kanal,
4 - Imager Block A mit Spektralfilter A,
5 - Imager Block B mit spektral Filter B,
6 - zusätzlicher Auslesekanal,
7 - Auslesekanal für den Imager Block A,
8 - Auslesekanal für den Imager Block B.

Für alle dargestellten Ausführungsbeispiele gilt, dass der jeweilige 3D-TOF Sensor ausgebildet sein kann, den Signalschritt des Prüfens der ersten Sendergruppe dadurch einzusparen, dass die Sendergruppen in wenigstens zwei verschiedenen Wellenlängenbereichen (die sich ggf. überlappen können) arbeiten und die Pixelmatrix so aufgebaut ist, dass Pixel A und Pixel B (oder Block A und Block B) durch ein entsprechendes optisches Filter auf eine der beiden verschiedenen Wellenlängenbereiche festgelegt sind, indem das jeweilige optische Filter nur einen der beiden Wellenlängenbereiche passieren lässt. Eine besonders bevorzugte Lösung ist die Verwendung der Wellenlänge 850nm für die erste Sendergruppe und die Pixel des Kanal A und 940nm für die zweite Sendergruppe und die Pixel des Kanals B.

**Patentansprüche**

1. 3D-TOF-Sensor mit mindestens einer Pixelmatrix, die eine in mindestens zwei Pixelgruppen und zwei Signalpfade (Kanäle A und B) geteilte Pixelstruktur aufweist, wobei die Signalpfade so geführt sind, dass die Signallaufzeiten entsprechend Pixellokalisierung für beide Signalpfade identisch sind und wobei jeder Signalpfad über einen eigenen unabhängigen analogen Signalausgang verfügt (Signal A und Signal B),

   wobei der 3D-TOF-Sensor außerdem mindestens zwei optische Sendergruppen aufweist, von denen jede Sendergruppe mindestens einen Sender enthält,
   wobei die optisch empfindlichen Flächen der Pixel des ersten Signalpfads (Pixel A) und der Pixel des zweiten Signalpfads (Pixel B) durch optisches Binning paarweise optisch so verbunden sind, dass beide Pixel die gleiche Lichtmenge aufnehmen und wobei die Signalpfade der jeweils ein Pixel A und ein Pixel B umfassenden Pixelgruppen nicht elektrisch miteinander verbunden sind.

2. 3D-TOF-Sensor nach Anspruch 1, bei dem die Sender im Infrarotspektralbereich arbeiten.

3. 3D-TOF-Sensor nach Anspruch 1 oder 2, bei dem für jeden Signalpfad der Pixelmatrix eine eigene Logik (Logik des Signalpfads A und des Signalpfads B) zum Steuern und zum Verarbeiten der von den Pixeln des entsprechenden Signalpfades stammenden Signalwerte vorgesehen ist.

4. 3D-TOF-Sensor nach Anspruch 3, bei dem die Logik jedes Signalpfades ausgebildet ist, Amplituden und Abstandswerte durch Verarbeitung der Signalwerte beider Signalpfade zu bestimmen, indem die Signalwerte kreuzweise ausgetauscht werden.

5. 3D-TOF-Sensor nach Anspruch 3, bei dem die optisch empfindlichen Flächen der
   Pixel des ersten Signalpfads (Pixel A) und der Pixel des zweiten Signalpfads (Pixel B) mittels eines Diffusors verbunden sind, der die Lichtmenge gleichmäßig über die optischen Flächen jeweils eines Pixels aus dem ersten Signalpfad (Pixel A) und eines Pixels aus dem zweiten Signalpfad (Pixel B) verteilt.

6. 3D-TOF-Sensor nach wenigstens einem der Ansprüche 1 bis 5, der eine Komparatorstufe aufweist, die zum Vergleichen der parallel an den Ausgängen der Pixelmatrix anliegenden Signalwerte miteinander und/oder mit einem Vorgabewert als Komparatorschwellwert ausgebildet ist.

7. 3D-TOF-Sensor nach wenigstens einem der Ansprüche 1 bis 6, der zwei Analog-Digital-Wandler aufweist, die zum Digitalisieren der analogen Signalwerte A und B in dem jeweiligen dem ersten Signalpfad A bzw. dem zweiten Signalpfad B ausgebildet und jeweils mit der Logik des ersten Signalpfads A bzw. der Logik des zweiten Signalpfads B verbunden sind.

8. 3D-TOF-Sensor nach wenigstens einem der Ansprüche 1 bis 7, der zum Prüfen der Funktionsfähigkeit der Fotoempfänger durch einen Vergleich der Signalwerte A und der Signalwerte B in einem zusätzlichen speziellen Signalverarbeitungsschritt ausgebildet ist, indem mit dem Start der Sender eine zeitgleiche Aktivierung der Pixel aus dem ersten Signalpfad A und der Pixel aus dem zweiten Signalpfad B erfolgt.

9. 3D-TOF-Sensor nach wenigstens einem der Ansprüche 1 bis 8, der zum Prüfen der Funktionsfähigkeit der Sender durch einen weiteren zusätzlichen Signalschritt ausgebildet ist, indem mit dem Start der Sender nur einer Sendergruppe die Aktivierung entweder der Pixel aus dem ersten Signalpfad A oder der Pixel aus dem zweiten Signalpfad B, erfolgt.

10. 3D-TOF-Sensor nach wenigstens einem der Ansprüche 1 bis 9, **dadurch gekennzeichnet, dass** jeder Signalpfad über einen Prozessor verfügt, der an den Signalpfad der Logik des Kanals angeschlossen ist, wobei jedem Prozessor die berechneten Amplituden und die Abstandswerte übermittelt werden die die jeweilige Logik übermittelt hat.

11. 3D-TOF-Sensor nach Anspruch 10, bei dem einer der beiden Prozessoren ein sicherheitsgerichteter Prozessor ist, der mindestens über zwei unabhängige rückwirkungsfreie Rechenkerne verfügt und zwei Eingänge auf einen Ausgang (1oo2 - one out of two) verarbeitet.

12. 3D-TOF-Sensor mit einem bildgebenden Sensor, der über einen Bildaufnehmer mit einer Pixelmatrix verfügt, wobei,

der Bildaufnehmer die Bilddaten in einzelnen mindestens zwei separaten unabhängigen Blöcken der Pixelmatrix auslesen kann und die Daten an mindestens zwei separate Signalpfade übergibt
wobei die Pixel der Pixelmatrix des Bildaufnehmers mindestens über einen photoempfindlichen Empfänger und eine Speicherzelle zum Speichern von Ladungsträgern verfügen, und
die Signalpfade jeweils einen Analog-Digitalwandler, eine programmierbare Logik, Speicherzellen sowie einen daran angeschlossenen Prozessor aufweisen,
wobei der Bildaufnehmer mindestens über einen Globalshutter für alle Blöcke verfügt, der über ein Steuersignal der programmierbaren Logik ausgelöst werden kann und eine minimale Shutterzeit von kleiner 100ns einstellen kann, und
die Signalpfade unabhängig und rückwirkungsfrei voneinander beschaltet sind, und
die Signalpfade so beschaltet sind, dass die Daten der Logiken oder der Prozessoren kreuzweise ausgetauscht werden können,
wobei jedem Block des Bildaufnehmers eine eigene abbildende Optik so zugeordnet ist, dass auf den mindestens zwei separaten unabhängigen Blöcken der Pixelmatrix das gleiche Bild der Objektseite abgebildet wird.

13. 3D-TOF-Sensor nach Anspruch 12, **dadurch gekennzeichnet, dass** jedem Block mindestens eine Beleuchtungsquelle zugeordnet ist, die mit dem Globalshutter über die Logik synchronisiert wird.

14. 3D-TOF-Sensor nach Anspruch 12 oder 13, **dadurch gekennzeichnet, dass** der Sensor sich dadurch auszeichnet, dass jeder Block über einen separaten Globalshutter verfügt, der von der Logik der zugeordneten Signalpfade gesteuert werden kann.

## Claims

1. 3D TOF sensor with at least one pixel matrix that has a pixel structure divided into at least two signal paths (channels A and B), wherein the signal paths are routed in such a way that the signal propagation times are identical for both signal paths according to the pixel localization and wherein each signal path has its own independent analog signal output (signal A and signal B),

wherein the 3D TOF sensor also has at least two optical transmitter groups, of which each transmitter group contains at least one transmitter,
wherein the optically sensitive surfaces of the pixels of the first signal path (pixels A) and the pixels of the second signal path (pixels B) are optically connected in pairs by optical binning in such a way that both pixels receive the same amount of light and wherein the signal paths of the pixel groups, each comprising a pixel A and a pixel B, are not electrically connected to one another.

2. 3D TOF sensor according to claim 1, wherein the transmitters operate in the infrared spectral range.

3. 3D TOF sensor according to claim 1 or 2, wherein a separate logic (logic of signal path A and signal path B) for controlling and processing the signal values originating from the pixels of the corresponding signal path is provided for each signal path of the pixel matrix

4. 3D TOF sensor according to claim 3, wherein the logic of each signal path is designed to determine the amplitudes and distance values by processing the signal values of both signal paths in such a way that the signal values are exchanged crosswise.

5. 3D TOF sensor according to claim 3, wherein the optically sensitive surfaces of the pixels of the first signal path (pixels A) and of the pixels of the second signal path (pixels B) are connected by means of a diffuser that distributes the amount of light evenly across the optical surfaces of respectively one pixel from first signal path (pixel A) and one pixel from the second signal path (pixel B).

6. 3D TOF sensor according to at least one of claims 1 to 5 that comprises a comparator step designed to compare the signal values present in parallel at the outputs of the pixel matrix with each other and/or with a default value as comparator threshold value

7. 3D TOF sensor according to at least one of claims 1 to 6 that comprises two analog-to-digital converters that are designed to digitize the analog signal values A and B in the respective first signal path A or second signal path B and that are respectively connected to the logic of first signal path A or the logic of second signal path B.

8. 3D TOF sensor according to at least one of claims 1 to 7 that is designed to test the functionality of the photo receivers by comparing the signal values A and the signal values B in an additional special signal processing step; it does so by activating the pixels of the first signal path A and the pixels of the second signal path B at the same time the transmitters are started.

9. 3D TOF sensor according to at least one of claims 1 to 8 that is designed to test the functionality of the transmitters by a further additional signal step; it does so by activating either the pixels of the first signal path A or the pixels of the second signal path B at the same time the transmitters in only one transmitter group are started.

10. 3D TOF sensor according to at least one of claims 1 to 9, **characterized in that** each signal path comprises a processor which is connected to the signal path of the logic of the channel, wherein the calculated amplitudes and distance values, which were transmitted by the respective logic, are transmitted to each processor

11. 3D TOF sensor according to claim 10, wherein one of the two processors is a safety-related processor that has at least two independent reactionless computing cores and processes two inputs on one output (1oo2 - one out of two).

12. 3D TOF sensor with an image sensor that comprises an image recorder with a pixel matrix, wherein

the image recorder can read out the image data in individual, at least two, separate independent blocks of the pixel matrix and transfer the data in at least two separate signal paths,
the pixels of the pixel matrix of the image recorder comprise at least one photosensitive receiver and a storage cell for storing charge carriers, and
the signal paths each have an analog-to-digital converter, a programmable logic, storage cells and a processor connected to them,
wherein the image recorder comprises at least one global shutter for all blocks that can be released by a control signal of the programmable logic and can set a minimum shutter time of less than 100ns, and
the signal paths are wired independently and reactionlessly from each other, and
the signal paths are wired such that the data of the logics or the processors can be exchanged crosswise
wherein each block of the image sensor is assigned its own imaging optics in such a way that the same image of the object side is imaged on the at least two separate in-dependent blocks of the pixel matrix

13. 3D TOF sensor according to claim 12, **characterized in that** at least one light source is assigned to each block, which is synchronized with the global shutter via the logic

14. 3D TOF sensor according to claim 12 or 13, **characterized in that** the sensor features a separate global shutter in each block that can be controlled by the logic of the assigned signal paths

## Revendications

1. Capteur TOF 3D ayant au moins une matrice de pixels, qui a une structure de pixels subdivisée en au moins deux groupes de pixels et deux chemins du signal (canaux A et B), dans lequel les chemins du signal sont tels, que les temps de parcours du signal correspondant à une localisation de pixels sont les mêmes pour les deux chemins du signal, et dans lequel chaque chemin du signal dispose de sa propre sortie de signal analogique indépendante (signal A et signal B),

dans lequel le capteur TOF 3D a en outre au moins deux groupes optiques d'émetteurs, dont chaque groupe d'émetteurs contient au moins un émetteur,
dans lequel les surfaces sensibles optiquement des pixels du premier chemin du signal (pixel A) et des pixels du deuxième chemin du signal (pixel B) sont reliées optiquement par paire, par binning optique, de manière à ce que les deux pixels reçoivent la même quantité de lumière et dans lequel les chemins du signal des groupes de pixels comprenant respectivement un pixel A et un pixel B ne sont pas reliés entre eux électriquement.

2. Capteur TOF 3D suivant la revendication 1, dans lequel les émetteurs travaillent dans le domaine spectral infrarouge.

3. Capteur TOF 3D suivant la revendication 1 ou 2, dans lequel, pour chaque chemin du signal de la matrice de pixels, il est prévu une logique propre (logique du chemin A du signal et du chemin B du signal) pour la commande et le traitement des valeurs de signal provenant des pixels du chemin de signal correspondant.

4. Capteur TOF 3D suivant la revendication 3, dans lequel la logique de chaque chemin du signal est constituée pour déterminer des amplitudes et des valeurs d'écart par traitement des valeurs de signal des deux chemins du signal, par le fait que les valeurs de signal sont échangées en croix.

5. Capteur TOF 3D suivant la revendication 3, dans lequel les surfaces sensibles optiquement des pixels du premier chemin du signal (pixel A) et des pixels du deuxième chemin du signal (pixel B) sont reliées au moyen d'un diffuseur, qui répartit la quantité de lumière uniformément sur les surfaces optiques respectivement d'un pixel provenant du premier chemin du signal (pixel A) et d'un pixel provenant du deuxième chemin du signal (pixel B) .

6. Capteur TOF 3D suivant au moins l'une des revendications 1 à 5, qui a un étage comparateur, qui est constitué pour la comparaison entre elles des valeurs de signal s'appliquant aux sorties de la matrice de pixels et/ou à une valeur de prescription comme valeur de seuil du comparateur.

7. Capteur TOF 3D suivant au moins l'une des revendications 1 à 6, qui a deux convertisseurs analogiques-numériques, qui sont constitués pour la numérisation des valeurs A et B de signal analogiques dans le premier chemin du signal A et respectivement le deuxième chemin du signal B et qui sont reliés respectivement à la logique du premier chemin du signal A et respectivement à la logique du deuxième chemin du signal B.

8. Capteur TOF 3D suivant au moins l'une des revendications 1 à 7, qui est constitué pour le contrôle de l'aptitude à fonctionner des photorécepteurs par une comparaison des valeurs de signal A et des valeurs de signal B dans un stade de traitement de signal supplémentaire spécial, par le fait qu'avec le démarrage de l'émetteur, a lieu une activation simultanée des pixels provenant du premier chemin du signal A et des pixels provenant du deuxième chemin du signal B.

9. Capteur TOD 3D suivant au moins l'une des revendications 1 à 8, qui est constitué pour le contrôle de l'aptitude à fonctionner des émetteurs par un autre stade supplémentaire de signal, par le fait qu'avec le démarrage des émetteurs de seulement un groupe d'émetteurs, a lieu l'activation soit des pixels provenant du premier chemin du signal A, soit des pixels provenant du deuxième chemin du signal B.

10. Capteur TOF 3D suivant au moins l'une des revendications 1 à 9, **caractérisé en ce que** chaque chemin du signal dispose d'un processeur, qui est raccordé au chemin du signal de la logique du canal, dans lequel il est transmis à chaque processeur les amplitudes calculées et les valeurs d'écart que la logique respective à transmise.

11. Capteur TOF 3D suivant la revendication 10, dans lequel l'un des deux processeurs est un processeur de sécurité, qui dispose d'au moins deux noyaux informatiques indépendants et sans réaction et qui traite deux entrées sur une sortie (1002 - one out of two).

12. Capteur TOF 3D comprenant un capteur d'imagerie, qui dispose d'un analyseur d'images ayant une matrice de pixels, dans lequel

l'analyseur d'images peut lire les données d'image individuellement dans au moins deux blocs indépendants distincts de la matrice de pixels et donner les données à au moins deux chemins du signal distinct, dans lequel les pixels de la matrice de pixels de l'analyseur d'images disposent d'au moins un récepteur photosensible et d'une cellule de mémoire pour la mise en mémoire de porteurs de charge, et les chemins du signal ont respectivement un convertisseur analogique-numérique, une logique programmable, des cellules de mémoire ainsi qu'un processeur qui y est raccordé, dans lequel l'analyseur d'image dispose d'au moins un obturateur global pour tous les blocs, qui peut être déclenché par un signal de commande de la logique programmable et qui peut régler un temps d'obturateur minimum plus petit que 100ns, et

les chemins du signal sont indépendants et sans réaction l'un par rapport à l'autre, et

les chemins du signal sont tels, que les données des logiques ou des processeurs peuvent être échangées en croix,

dans lequel, à chaque bloc de l'analyseur d'images est associée une optique reproductrice propre, de manière à reproduire la même image du côté objet sur au moins deux blocs indépendants distincts de la matrice de pixels.

13. Capteur TOF 3D suivant la revendication 12, **caractérisé en ce que**, à chaque bloc, est associée au moins une source d'éclairage, qui est synchronisée à l'obturateur global par la logique.

14. Capteur TOF 3D suivant la revendication 12 ou 13, **caractérisé en ce que** le capteur se **caractérise en ce que** chaque bloc dispose d'un obturateur global distinct, qui peut être commandé par la logique des chemins du signal associés.

ausgesendeter
Lichtimpuls

$t_f$

reflektierter
Lichtimpuls

A    B

t

Integration
Pixel A    $\Delta$

Integration
Pixel B    $2\Delta$

Fig. 1

Fig. 2

Fig. 3

Fig. 4

a)

| A1 | A2 | A | A | A | A |
| B1 | B2 | B | B | B | B |
| A | A | A | A | A | A |
| B | B | B | B | B | B |

b)

| A1 | B1 | A | B | A | B |
| B2 | A2 | B | A | B | A |
| A | B | A | B | A | B |
| B | A | B | A | B | A |

| A1 | B1 | A | B | A | B |
| A2 | B2 | A | B | A | B |
| A | B | A | B | A | B |
| A | B | A | B | A | B |

c)

Fig. 5

Fig. 6

Fig. 7

ausgesendeter
Lichtimpuls

$t_f$

reflektierter
Lichtimpuls

Integration Pixel A und Pixel B

$2\Delta$

t

FIG. 8

Fig. 9

FIG. 10

EP 3 861 374 B1

Fig. 11

a)

b)

Fig. 12

Fig. 13

Fig. 14

Fig. 15

FIG. 16

EP 3 861 374 B1

| Prüfen Sendergruppe 1 | Prüfen Empfänger | Bildprozess | Prüfen Sendergruppe 2 |
|---|---|---|---|

# FIG. 17

Pixel A

APS(A)

Sa5

Ca1

Sa1

Sa2

Ca2

Sa4

Sa3

Vref

S&H(A) → Signal A

Pixel B

APS(B)

Sb5

Cb1

Sb1

Sb2

Cb2

Sb4

Sb3

Vref

S&H(B) → Signal B

FIG. 18

FIG. 19

FIG. 20

Fig. 21

Fig. 22

ausgesendeter
Lichtimpuls

tof

reflektierter
Lichtimpuls

Integration in Block A und Block B

FIG. 23

EP 3 861 374 B1

FIG. 24

Fig. 25

FIG. 26

EP 3 861 374 B1

**IN DER BESCHREIBUNG AUFGEFÜHRTE DOKUMENTE**

**In der Beschreibung aufgeführte Patentdokumente**

- US 2017257617 A1
- WO 2017050633 A1
- EP 3182162 A1
- WO 2018172767 A1